(19) Europäisches Patentamt
European Patent Office
Office européen des brevets

(11) EP 4 453 127 B1

(12) **EUROPEAN PATENT SPECIFICATION**

(45) Date of publication and mention of the grant of the patent:
**30.04.2025 Bulletin 2025/18**

(21) Application number: **24711876.3**

(22) Date of filing: **13.03.2024**

(51) International Patent Classification (IPC):
***C09K 8/588*** *(2006.01)* ***C08F 120/56*** *(2006.01)*
***C09K 8/68*** *(2006.01)* ***C09K 8/88*** *(2006.01)*

(52) Cooperative Patent Classification (CPC):
(C-Sets available)
**C09K 8/588; C08F 120/58; C08F 220/56** (Cont.)

(86) International application number:
**PCT/EP2024/056686**

(87) International publication number:
**WO 2024/189088 (19.09.2024 Gazette 2024/38)**

(54) **METHOD FOR ENHANCED RECOVERY OF HYDROCARBONS USING A POLYMER OF A CRYSTALLINE FORM OF 2-ACRYLAMIDO-2-METHYLPROPANESULPHONIC ACID SODIUM SALT**

VERFAHREN ZUR VERBESSERTEN GEWINNUNG VON KOHLENWASSERSTOFFEN UNTER VERWENDUNG EINES POLYMERS EINER KRISTALLINEN FORM VON 2-ACRYLAMIDO-2-METHYLPROPANSULFONSÄURE-NATRIUMSALZ

PROCÉDÉ DE RÉCUPÉRATION AMÉLIORÉE D'HYDROCARBURES METTANT EN OEUVRE UN POLYMÈRE D'UNE FORME CRISTALLINE DE SEL DE SODIUM D'ACIDE 2-ACRYLAMIDO-2-MÉTHYLPROPANESULFONIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.03.2023 FR 2302307**

(43) Date of publication of application:
**30.10.2024 Bulletin 2024/44**

(73) Proprietor: **SNF Group**
**42160 Andrézieux-Bouthéon (FR)**

(72) Inventors:
- **FAVERO, Cédrick**
  **42160 Andrezieux-Boutheon (FR)**
- **LEGRAS, Benoit**
  **42160 Andrezieux-Boutheon (FR)**
- **KIEFFER, Johann**
  **42160 Andrezieux-Boutheon (FR)**

(74) Representative: **Cabinet Laurent & Charras**
**Le Contemporain**
**50 Chemin de la Bruyère**
**69574 Dardilly Cedex (FR)**

(56) References cited:
**EP-B1- 3 601 220** **EP-B1- 3 601 222**
**WO-A1-2018/172682** **WO-A1-2018/172684**
**CN-A- 113 528 113**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/56, C08F 220/585**

## Description

### Field of the invention

The present invention relates to a method for enhanced recovery of hydrocarbons (oil and/or gas) using water-soluble polymers obtained from the crystalline form of 2-acrylamido-2-methylpropanesulphonic acid sodium salt.

### Prior art

Most of the oil fields currently exploited have become mature and have, in fact, begun the decline of their production or are about to do so. The recovery rate of these fields is currently on the order of 15 to 35% on average compared to the initial amount of oil. They therefore offer production potential which is always considerable.

Generally, the recovery of the crude oil contained in the deposits is carried out in several stages.

The production results first of all from the natural energy of the fluids and the rock which decompress themselves. At the end of this depletion phase, the amount of oil recovered at the surface represents on average approximatively from 5 to 15% of the initial reserve. It is therefore necessary, in a second stage, to use techniques to increase the recovery yield by maintaining the field pressure.

The most frequently implemented method consists of injecting water into the deposit through injection wells dedicated to this purpose. This is called secondary recovery. This second phase stops when the water/oil ratio is too high, that is to say when the amount of water in the mixture produced by the producing wells is too high. This secondary recovery thus makes it possible to obtain an additional recovery rate of the order of 10 to 20%.

The other techniques that can be used are known as enhanced oil recovery (EOR). Their aim is to recover between 10 and 35% of additional oil compared to the initial quantity of oil. Various thermal or non-thermal techniques are known as enhanced oil recovery, such as the so-called electrical, miscible, steam or even chemical techniques for enhanced recovery of the remaining oil (see "Oil & gas science and technology" - IFP journal, vol 63 (2008) No.1, pp 9-19).

The term "oil" should be understood to mean any type of oil, namely light oil, heavy oil or even bituminous oil. An oil is usually the result of the natural transformation of organic matter and is composed of a mixture of hydrocarbons. In the description of the prior art or of the invention, the terms "petroleum" and "oil" are used to designate the same material, with the exception of the mention of the composition of an emulsion or of a dispersion. The efficiency of water injection sweeping is generally improved by the addition of water-soluble polymers. The expected and proven benefits of the use of polymers, through the "viscosification" of the injected waters, are the improvement of the sweep and the reduction of the viscosity contrast between the fluids to control their mobility ratio in the field, in order to recover the hydrocarbons quickly and efficiently. These polymers increase the viscosity of water.

It is known to the person skilled in the art that synthetic water-soluble polymers, in particular 2-acrylamido-2-methylpropanesulphonic acid-based polymers (ATBS), are very advantageous polymers for increasing the viscosity of aqueous solutions and are used in enhanced recovery. Indeed, ATBS-based polymers are known to be tolerant to divalent salts as well as high temperatures.

Documents WO2018/172682 and EP3601220 disclose the use of ATBS-polymers in injection fluids for enhanced oil recovery.

In addition to increasing the viscosity of the water, the polymers used must have good filterability. Polymers with poor filterability tend to clog the formation and slow or even inhibit the production of hydrocarbons (oil and/or gas). However, the filterability deteriorates as the molecular weight of the polymer increases. There is therefore a delicate compromise between molecular weight and filterability.

Polymers added to the injection water are generally subjected to long residence times in the deposit, between the injection wells and the production wells, ranging from a few months to a few years. During this period of time, they may undergo thermal degradation resulting in an increase in their rate of hydrolysis by conversion of acrylamide or ATBS units into acrylates, or chemical degradation leading to a chain break (decrease in molecular weight) by radical attack. In both cases, these mechanisms generally result in a decrease in viscosity and therefore a loss of the efficiency of sweeping the subterranean formation by the injected aqueous polymer solution. There is therefore a real interest in developing polymers that are more resistant to these processes involved in any enhanced hydrocarbon recovery project (oil and/or gas).

### Disclosure of the invention

The Applicant has found and developed a method for enhanced recovery of hydrocarbons (oil and/or gas) using water-soluble polymers containing as monomer a crystalline form of 2-acrylamido-2-methylpropanesulphonic acid sodium salt (ATBS.Na), said polymers having improved properties in particular in terms of filterability and chemical and thermal stability.

The improved performances of the injection fluid containing polymers obtained from the crystalline form of

ATBS.Na help reduce the quantity of product necessary and therefore reduce the overall water consumption and emissions of greenhouse gases such as the $CO_2$.

More specifically, the invention relates to a method for enhanced hydrocarbon (oil and/or gas) recovery comprising the following steps:

a) Preparing an injection fluid comprising at least one water-soluble polymer of 2-acrylamido-2-methylpropanesulphonic acid (ATBS), with water or brine;
the ATBS being, prior to polymerization, a crystalline form of ATBS sodium salt having an X-ray powder diffraction pattern comprising peaks at 11.7°; 12.2°; 13.2°; 13.5°; 15.6°; 16.8°; 17.8°; 18.5°; 19.1°; 20.6°; 21.4°; 23.3°; 25.1°; 25.8°; 26.9°; 29.1°; 29.5°; 31.0°; 33.0°; 33.6°; 34.4°; 35.2°; 35.9°; 37.1°; 38.4°; 39.6°; 41.1°; 42.9°; 45.1°; 46.0°; 47.2°; 47.6° 2-theta angles;
b) Injecting the injection fluid into a subterranean formation;
c) Sweeping the subterranean formation using the injected fluid;
d) Recovering an aqueous hydrocarbon mixture (mixture comprising water and hydrocarbons).

Quite surprisingly, the use of at least one water-soluble polymer obtained from the crystalline form of ATBS sodium salt makes it possible to effectively treat subterranean formations. It is indeed the use of the crystalline form of ATBS sodium salt, in the preparation of the water-soluble polymer, which gives said polymer particular properties, making it possible to improve the recovery of hydrocarbons.

**Description of the invention**

The term "polymer" should be understood to mean a homopolymer or a copolymer. The term "copolymer" should be understood to mean a polymer obtained from at least two different monomers. It may therefore be a copolymer of at least two monomers chosen from hydrophilic anionic monomers, hydrophilic cationic monomers, hydrophilic non-ionic monomers, hydrophilic zwitterionic monomers, hydrophobic monomers and the mixtures thereof.

The term "hydrophilic monomer" should be understood to mean a monomer that has an octanol-water partition coefficient, $K_{ow}$, equal or less than 1, in which the partition coefficient $K_{ow}$ is determined at 25°C in an octanol-water mixture with a volume ratio of 1/1, at a pH of between 6 and 8.

The term "crystal" or "crystalline form" refers to a solid material whose constituents (such as atoms, molecules, or ions) are arranged in a highly ordered microscopic structure, forming a crystal lattice that extends in all directions. It does not encompass amorphous solid.

The term "hydrophobic monomer" should be understood to mean a monomer that has an octanol-water partition coefficient, $K_{ow}$, greater than 1, in which the partition coefficient $K_{ow}$ is determined at 25°C in an octanol-water mixture with a volume ratio of 1/1, at a pH of between 6 and 8.

The octanol-water partition coefficient, $K_{ow}$, represents the ratio of concentrations (g/L) of a monomer between the octanol phase and the aqueous phase. It is defined as follows:

[Math 1]

$$K_{ow} = \frac{[monomer]_{octanol}}{[monomer]_{water}}$$

By definition, a water-soluble polymer is a polymer that gives an aqueous solution without insoluble particles when it is dissolved while stirring at 25°C and with a concentration of 50 $g.L^{-1}$ in water.

"X and/or Y" should be understood to mean "X", or "Y", or "X and Y".

The invention also includes all possible combinations of the various embodiments disclosed, whether they are preferred embodiments or given by way of example. Furthermore, when ranges of values are indicated, the limit values are included in these ranges. The disclosure also includes all of the combinations between the limit values of these ranges of values. For example, the ranges of values "1-20, preferably 5-15" imply disclosure of the ranges "1-5", "1-15", "5-20" and "15-20" and the values 1, 5, 15 and 20.

**Crystalline form of ATBS sodium salt**

The crystalline form of ATBS sodium salt has an X-ray powder diffraction pattern comprising peaks at 11.7°; 12,2°; 13,2°; 13,5°; 15,6°; 16,8°; 17,8°; 18,5°; 19,1°; 20,6°; 21,4°; 23,3°; 25,1°; 25,8°; 26,9°; 29,1°; 29,5°; 31,0°; 33,0°;

33,6°; 34,4°; 35,2°; 35,9°; 37,1°; 38,4°; 39,6°; 41,1°; 42,9°; 45,1°; 46,0°; 47,2°; 47,6° 2-theta angles. The uncertainty of these peaks is generally of the order of +/- 0.1°.

X-ray crystallography, radiocrystallography or X-ray diffractometry is an analytical technique used to study the structure of crystalline matter on an atomic scale. It is based on the physical phenomenon of X-ray diffraction. A diffractometer with a copper source can be used.

A powder formed from a particular crystalline phase always shows diffraction peaks in the same directions. This diffraction pattern thus forms a true signature of the crystalline phase. It is therefore possible to determine the nature of each crystalline phase within a mixture or a pure product.

This signature is specific to each crystalline organic or inorganic compound, and is in the form of a list of peaks positioned at an angle of 2θ (2-theta).

This technique is used to characterize matter, in particular the different crystalline forms that can exist for the same chemical molecule.

The crystalline form of ATBS sodium salt has a Fourier-transform infrared spectrum comprising peaks at 3576 $cm^{-1}$, 3485 $cm^{-1}$, 3310 $cm^{-1}$, 3079 $cm^{-1}$, 2975 $cm^{-1}$, 1658 $cm^{-1}$, 1629 $cm^{-1}$, 1543 $cm^{-1}$, 1403 $cm^{-1}$, 1321 $cm^{-1}$, 1301 $cm^{-1}$, 1205 $cm^{-1}$, 1187 $cm^{-1}$, 1163 $cm^{-1}$, 1046 $cm^{-1}$, 980 $cm^{-1}$, 629 $cm^{-1}$. The uncertainty of these peaks is generally of the order of 8 $cm^{-1}$.

The infrared measurement is carried out by Fourier transform, for example using a Perkin Elmer Spectrum 100 spectrometer fitted with a single reflection ATR polarization accessory, with an accuracy of 8 $cm^{-1}$.

Fourier-transform infrared spectroscopy is the analysis of the vibrations emitted, absorbed or scattered by molecules. This technique is sensitive to so-called short interactions (influence of the unit mesh on the bonds). In most cases, the Fourier-transform infrared spectra of different crystalline systems differ significantly. The Fourier-transform infrared spectrum therefore reflects the details of the crystalline structure of a chemical compound.

Generally, and unless otherwise indicated, the X-ray diffraction pattern and the infrared spectrum are obtained at 20°C and at a pressure of 1 atmosphere absolute (101,325 Pa).

The crystalline form of ATBS sodium salt has a minimum ignition energy greater than 500 mJ, and preferably greater than 1000 mJ (1 mJ = $10^{-3}$ joule).

The minimum ignition energy represents the minimum energy that must be supplied to a product (chemical compound) to cause it to ignite. The energy may be electrical or thermal. The minimum ignition energy is an essential piece of information when considering the risk of explosion during product handling (transfer, storage, reaction, shaping, etc.).

The minimum ignition energy depends on the properties of the powder (composition) and its macromolecular structure (particle size, crystalline form, specific surface area).

In the case of solids, this energy is the minimum energy of an electric spark likely to ignite a cloud of dust. The higher the value of the minimum ignition energy, the less risk the solid presents when used, handled or stored.

The minimum ignition energy is measured in accordance with standard NF EN 13821.

The crystalline form of ATBS sodium salt exhibits 4 thermal phenomena with the differential scanning calorimetry technique, at 49.8°C; 144.8°C; 169.8°C and 254.3°C. The uncertainty relating to the observation of these phenomena is generally of the order of 10°C, advantageously 5°C or less.

The thermal phenomena are measured by differential scanning calorimetry (DSC). This technique uses the measurement of the variation in heat associated with the thermal denaturation of the compound when it is heated at constant speed, for example with a heating ramp of 10°C/minute.

**Method for producing the crystalline form of the ATBS sodium salt**

The method for producing the crystalline form of ATBS sodium salt comprises at least the following successive steps:

1) mixing of ATBS with an aqueous solution $SA_1$ and at least one sodium salt base, advantageously for at least 1 minute, in order to form an aqueous solution or an aqueous suspension $SA_2$;
2) distillation, at a pressure of 700 mbar or less, of the aqueous solution or of the aqueous suspension $SA_2$ in order to form a suspension $S_1$;
3) solid-liquid separation of the suspension $S_1$ and isolation of the crystals of the suspension $S_1$ obtained at the end of step 2) in the form of a composition $C_1$.

The crystals obtained are in the crystalline form of ATBS sodium salt.

"Sodium salt(s) base" in step 1), should be understood to mean at least one inorganic sodium salt Brønsted base, for example sodium hydroxide, sodium carbonate, sodium bicarbonate or mixtures thereof.

The temperature and the mixing time of step 1) may vary as a function, in particular, of the concentration of ATBS. A person skilled in the art knows how to adapt the temperature variation and the mixing time to optimize the formation of the

crystals.

The method for producing the crystalline form of ATBS.Na can be carried out on any form of ATBS, such as, for example, the needle- shape form or the hydrated form.

The production method may be carried out on ATBS of any degree of purity.

Therefore, the method may be carried out downstream of any type of method for producing ATBS. It may also be carried out on any forms of ATBS i.e. amorphous or crystalline, that have already been obtained.

**Step 1) of the method for producing the crystalline form of ATBS.Na:**

ATBS is produced by a production method as previously described (acrylonitrile, fuming sulphuric acid and isobutylene). The ATBS may be in the form of fine powder or shaped in a controlled manner by a method such as compaction, granulation or extrusion.

The ATBS may be added to an aqueous solution $SA_1$ before, after or in parallel with the sodium salt base, and preferably in parallel. Preferably, the aqueous solution is water.

The sodium salt base may be added as an aqueous solution $SA_1$. In this case, the aqueous solution of sodium salt base can be partially or totally the aqueous solution SA1.

Advantageously, the concentration of ATBS sodium salt in the aqueous solution or in the aqueous suspension $SA_2$ is between 1% by weight and saturation, preferably between 10% by weight and saturation, more preferably between 20% by weight and saturation, more preferably between 30% by weight and saturation, more preferably between 40% by weight and saturation, and even more preferably between 50% by weight and saturation, by weight relative to the weight of the aqueous solution or of the aqueous suspension $SA_2$.

The ATBS and the sodium base may be added all at once or in several stages. They are preferably added all at once.

When they are added in several stages, the ATBS and the sodium salt base are added in fractions.

When the ATBS and the sodium salt base are added in fractions, there is no limit to the number of fractions, advantageously there are at least two fractions, and preferably at least three fractions.

There is no limitation to the order of addition of the ATBS and the sodium salt base. They may be added at the same time (i.e., in parallel), one after the other (the ATBS first, then the sodium salt base, or vice versa), or alternately (a first fraction pf ATBS, then a first fraction of the sodium salt base, followed by a second fraction of ATBS then a second fraction of the sodium salt base, and so on); they are preferably added at the same time.

When they are added one after the other or alternately, the second compound (whether it is the ATBS or the sodium salt base) can start being added before the first compound has finished being added.

A first fraction F1 of ATBS advantageously represents at least 1 mol% of the total of the ATBS present in the aqueous solution or the aqueous suspension $SA_2$, preferably at least 5 mol%, more preferably at least 10 mol%, even more preferably at least 15 mol% and even more preferably at least 20 mol%.

A second fraction F2 of ATBS advantageously represents at least 1 mol% of the total of the ATBS present in the aqueous solution or the aqueous suspension $SA_2$, preferably at least 5 mol%, more preferably at least 10 mol%, even more preferably at least 15 mol% and even more preferably at least 20 mol%.

A third fraction F3 of ATBS advantageously represents at least 1 mol% of the total of the ATBS present in the aqueous solution or the aqueous suspension $SA_2$, preferably at least 5 mol%, more preferably at least 10 mol%, even more preferably at least 15 mol% and even more preferably at least 20 mol%.

In one particular embodiment, the method is carried out continuously, in which case the ATBS and the sodium salt base are added continuously.

The quantity of ATBS in the aqueous solution or the aqueous suspension $SA_2$ is advantageously between 10 and 90% by weight relative to the total weight of the aqueous solution or of the aqueous suspension $SA_2$, preferably between 20 and 85% by weight, more preferably between 30 and 80% by weight.

The mixing of step 1) (ATBS + sodium salt base) is advantageously carried out at a temperature of between 0 and 90°C, preferably between 5 and 60°C, more preferably between 10 and 40°C, in order to obtain the aqueous solution or the aqueous suspension $SA_2$.

In one particular embodiment, the aqueous solution or the aqueous suspension $SA_2$ may comprise one or more organic solvents.

In some embodiments, the aqueous solution $SA_1$ may comprise one or more organic solvents.

The quantity of organic solvent may vary as a function of the temperature and the quantity of ATBS or sodium salt base. This quantity is not limited, provided it does not prevent the crystalline form of ATBS sodium salt base from being obtained. A person skilled in the art knows how to determine this limit, which is a routine task. Generally, the aqueous solution or the aqueous suspension $SA_2$ comprises more water (by volume) than organic solvent.

The organic solvent or solvents are advantageously chosen from the following compounds:

- organic acids, advantageously carboxylic acids comprising between 1 and 8 carbon atoms;
- amides advantageously comprising between 1 and 8 carbon atoms;
- alcohols advantageously comprising between 1 and 8 carbon atoms;
- ketones advantageously comprising between 3 and 8 carbon atoms;
- ethers advantageously comprising between 2 and 8 carbon atoms;
- esters advantageously comprising between 2 and 8 carbon atoms;
- alkanes advantageously comprising between 4 and 8 carbon atoms, preferably between 5 and 6 carbon atoms;
- halogenated hydrocarbon compounds advantageously comprising between 1 and 8 carbon atoms;
- nitriles advantageously comprising between 1 and 8 carbon atoms; or
- mixtures thereof.

When an organic solvent is used in the invention, the temperature may be adjusted so that the solvent + water mixture remains in liquid form.

These compounds may be linear or branched. They may be saturated or comprise unsaturated bonds. An unsaturated bond corresponds to a double or triple bond (for example C=C or C≡C).

The organic solvent is preferably chosen from acrylonitrile, isopropanol, acrylic acid, acetic acid or mixtures thereof. The organic solvent is preferably acrylonitrile.

The organic solvent is generally in liquid form at the temperature at which steps 2) and 3) are carried out. Furthermore, it is advantageously partially miscible in water, and preferably completely miscible in water.

The organic solvent may, if necessary, be used to solubilize any impurities or by-products present with the ATBS used to form the aqueous solution or the aqueous suspension $SA_2$. However, ATBS is not necessarily soluble in the solvent.

In a preferred embodiment according to the invention, the aqueous solution or the aqueous suspension $SA_2$ does not contain organic solvent.

In a preferred embodiment according to the invention, the aqueous solution $SA_1$ does not contain organic solvent.

The time allowed for mixing the aqueous solution $SA_1$ and the ATBS is advantageously at least 1 minute, preferably between 1 minute and 600 minutes, more preferably between 5 minutes and 400 minutes, and even more preferably between 10 minutes and 240 minutes.

The compounds of step 1) can be mixed using various technologies. Examples include, but are not limited to, reactors with stirrers, loop reactors, static mixers, microreactors, piston reactors, agitated filter dryers, for example by Nutsche, paddle mixers, twin-cone mixers, ploughshare mixers and disc mixers.

The pH in step 1) is advantageously controlled between 6 and 14, preferably between 8 and 14, more preferably between 10 and 14, even more preferably between 12 and 14, and even more preferably between 13 and 14.

The quantity of ATBS.Na in the aqueous solution $SA_2$ or the aqueous suspension $SA_2$ is advantageously between 10 and 90% by weight relative to the total weight of the aqueous solution or of the aqueous suspension $SA_2$, preferably 20 and 90%, preferably between 30 and 90% by weight, preferably between 50 and 90% by weight, preferably between 20 and 85% by weight, more preferably between 30 and 80% by weight.

**Step 2) of the method for producing the crystalline form of the ATBS sodium salt:**

The distillation of the aqueous solution or of the aqueous suspension $SA_2$ takes place at a pressure of 700 mbar or less. It generally takes place in a vacuum distillation device, which is typically an evaporator. It is therefore also referred to here as "vacuum distillation".

When the aqueous solution or the aqueous suspension $SA_2$ is distilled, typically by passing it through an evaporator, crystals of ATBS sodium salt begins to form. particles of the sodium salt of ATBS coexists in the aqueous solution $SA_2$ or the aqueous suspension $SA_2$.

The aqueous solution or the aqueous suspension $SA_2$ can be distilled using an evaporator. This may be a falling film evaporator, or a rising film evaporator, or a scraped thin film evaporator, or a short path evaporator, or a forced circulation evaporator, or a spiral tube evaporator, or a flash evaporator. It may also be a continuously stirred reactor. Preferably, distillation takes place in a scraped thin film evaporator, a short path evaporator or a forced circulation evaporator. Even more preferably, distillation takes place in a scraped thin film evaporator.

Generally, an evaporator is a device comprising an inlet for solution to be treated (aqueous solution or aqueous suspension $SA_2$), an outlet for discharging the distilled solvent (the water and any organic solvents) and an outlet for discharging the suspension $S_1$.

The residence time of the aqueous solution or of the aqueous suspension $SA_2$ in the distillation device (advantageously under vacuum), which is advantageously an evaporator, in other words the distillation time at a pressure of 700 mbar or less, is advantageously comprised between 1 second and 600 seconds, preferably between 3 seconds and

300 seconds, more preferably between 30 seconds and 100 seconds. The residence time corresponds to the time necessary to carry out step 2), i.e., the time required to prepare the suspension $S_1$ by distillation of the aqueous solution or of the aqueous suspension $SA_2$. In other words, when an evaporator is used, it is the residence time of the ATBS (and/or the crystalline form of its sodium salt) between the inlet and the outlet of the device. This residence time depends on the quantity of water (and any organic solvents), ATBS.Na and sodium salt base present in the aqueous solution or the aqueous suspension $SA_2$. A person skilled in the art knows how to adapt this residence time in order to obtain ATBS.Na in the crystalline form depending on the quantity of the constituents of the aqueous solution or of the aqueous suspension $SA_2$.

The distillation can be carried out in a vertical or horizontal evaporator. Preferably, it is carried out in a vertical evaporator.

The aqueous solution or the aqueous suspension $SA_2$ can circulate co-current or counter-current to the vapours generated by the evaporation. Preferably, it circulates counter-current to the vapours in the distillation device. In other words, the aqueous solution or the aqueous suspension $SA_2$ is preferably introduced into the distillation device, advantageously an evaporator, co-current or counter-current to the distilled solvent.

The aqueous solution or the aqueous suspension $SA_2$ may circulate in one or more evaporators in series before obtaining the suspension $S_1$. Preferably, it circulates in a single evaporator.

The pressure during distillation is advantageously between 1 and 700 mbar absolute (1 mbar = 100 Pa). It is preferably than 700 mbar absolute, more preferably less than 600 mbar absolute, more preferably less than 500 mbar absolute, more preferably less than 400 mbar absolute, more preferably less than 300 mbar absolute, more preferably less than 200 mbar absolute, more preferably less than 100 mbar absolute and even more preferably less than 50 mbar absolute, and advantageously greater than 1 mbar absolute. The absolute pressure corresponds to the pressure relative to zero pressure (vacuum).

In general, the pressure during distillation is preferably comprised between 10 and 700 mbar, preferably between 20 and 700 mbar, preferably between 40 and 700 mbar more preferably between 50 and 600 mbar, more preferably between 50 and 500 mbar, more preferably between 50 and 400 mbar, more preferably between 50 and 300 mbar, more preferably between 100 and 700 mbar, more preferably between 200 and 700 mbar, more preferably between 500 and 700 mbar, more preferably between 40 and 100 mbar.

In one particular embodiment, step 2) comprises a step 2') (optional) for helping the solvent to evaporate. Step 2') consists in increasing the temperature of the aqueous solution or of the aqueous suspension $SA_2$, in other words the distillation according to step 2') is carried out under heat.

In some embodiments, in step 2), the aqueous solution or the aqueous suspension $SA_2$ is heated, advantageously at a temperature of between 5°C and 95°C, preferably between more than 10°C and 60°C, more preferably between more than 20°C and 40°C.

The heating during distillation may be carried out by various technologies. Examples include, but are not limited to, heating with steam, with hot water, with electricity, by steam compression, or indeed by using a heat pump. Thus, the distillation device may be of the double-walled type, with a hot heat-transfer fluid circulating between the two walls.

The aqueous solution or the aqueous suspension $SA_2$ is advantageously heated to a temperature between more than 5°C and 95°C, preferably between more than 10°C and 60°C, more preferably between more than 20°C and 40°C.

When the aqueous solution or the aqueous suspension $SA_2$ is heated, the temperature is advantageously greater than the temperature of step 1).

The temperature of the aqueous solution or of the aqueous suspension $SA_2$ advantageously increases at a ramp of between 0.1 and 10°C/hour, preferably between 0.2 and 9°C/hour, more preferably between 0.3 and 8°C/hour, and even more preferably between 0.5 and 5°C/hour.

In some embodiments, the temperature of the aqueous solution or of the aqueous suspension $SA_2$ advantageously increases at a ramp of between 10 and 150°C/hour, preferably between 30 and 110°C/hour, more preferably between 50 and 100°C/hour, and even more preferably between 60 and 90°C/hour.

The increase in temperature may not be constant throughout the whole process. For example, the aqueous solution or the aqueous suspension $SA_2$ may be heated by 5°C per hour for the first three hours, and then heated at a speed of 10°C per hour until the final temperature is reached.

According to another particular embodiment of the invention, step 2) may comprise a step 2") (optional), after step 2'), or instead of step 2'), that helps to increase the productivity and the profitability of the method of the invention by accelerating the crystallization of the ATBS into the crystalline form of its sodium salt. Step 2") consists in decreasing the temperature of the aqueous solution or of the aqueous suspension $SA_2$.

The aqueous solution or the aqueous suspension $SA_2$ is advantageously cooled to a temperature of between 5 and less than 95°C, preferably between 10 and less than 60°C, more preferably between 20 and less than 40°C and even more preferably between 10 and 40°C.

In some embodiments, step 2) further comprises a cooling step.

The cooling step is advantageously carried out at a temperature of between 5°C and 95°C, preferably between

more than 10°C and 60°C, more preferably between more than 10°C and 40°C.

In some embodiments, the temperature of the cooling step is decreased at a ramp of between 0.1 and 8°C/hour, preferably between 0.2 and 8°C/hour, more preferably between 0.3 and 8°C/hour, and even more preferably between 0.5 and 5°C/hour.

In some embodiments, the temperature of the cooling step is advantageously inferior to the temperature of heating of step 2) and/or step 1).

In some embodiments, the cooling step is carried out on the aqueous solution or the aqueous suspension $SA_2$ and/or the concentrated aqueous solution or the aqueous suspension $SA_2$ and/or the suspension $S_1$.

When the aqueous solution or the aqueous suspension $SA_2$ is cooled (step 2"), the temperature is advantageously less than the temperature of steps 2) and optionally 2').

According to a preferred embodiment, the temperature of step 2") is the same or less than the temperature of step 1).

In some embodiments, no organic solvent or aqueous solution is added in step 2'' for obtaining the crystals of ATBS.Na.

The temperature of the solution or of the aqueous suspension $SA_2$ advantageously decreases at a ramp of between 0.1 and 8°C/hour, preferably between 0.2 and 8°C/hour, more preferably between 0.3 and 8°C/hour, and even more preferably between 0.5 and 5°C/hour.

The decrease in temperature may not be constant throughout the whole process. For example, the aqueous solution or the aqueous suspension $SA_2$ may be cooled by 5°C per hour for the first three hours, and then cooled at a speed of 8°C per hour until the final temperature is reached.

While the aqueous solution or the aqueous suspension $SA_2$ is being cooled, crystals of ATBS sodium salt form and a suspension $S_1$ is obtained.

In one particular embodiment, previously obtained crystals of sodium salt of ATBS may be added during this step in order to modify the formation of the suspension $S_1$, a process referred to as crystal seeding which makes it possible to better control the crystallization temperature, the particle size of the crystals, the particle size distribution, the purity of the end product and, possibly, the yield. The crystals of sodium salt of ATBS have advantageously an X-ray powder diffraction pattern comprising peaks at 11.7°; 12,2°; 13,2°; 13,5°; 15,6°; 16,8°; 17,8°; 18,5°; 19,1°; 20,6°; 21,4°; 23,3°; 25,1°; 25,8°; 26,9°; 29,1°; 29,5°; 31,0°; 33,0°; 33,6°; 34,4°; 35,2°; 35,9°; 37,1°; 38,4°; 39,6°; 41,1°; 42,9°; 45,1°; 46,0°; 47,2°; 47,6° 2-theta angles (+/- 0.1°).

According to one particular embodiment of the invention, the solvent distilled in step 2) may be partially or totally recycled in order to form the aqueous solution or aqueous suspension $SA_2$ of step 1). In other words, the distilled solvent is advantageously at least partially recycled in the aqueous solution or aqueous suspension $SA_2$.

According to another particular embodiment of the invention, the distilled solvent may be partially or totally recycled, generally to wash the crystals of sodium salt of ATBS obtained after step 3) of solid-liquid separation, in an optional step 4), with or without a prior treatment step.

The obtained suspension $S_1$ advantageously comprises between 30 and 90% by weight of crystalline form of ATBS.Na, relative to the total weight of the suspension $S_1$, preferably between 50 and 90% by weight, more preferably between 30 and 80% by weight of crystalline form of ATBS.Na, relative to the total weight of the suspension $S_1$, and preferably between 50 and 60% by weight.

During step 2), the pH is advantageously greater than 10, preferably greater than 11, more preferably greater than 12, and the pH is even more preferably between 13 and 14.

**Step 3) of the method for producing the crystalline form of the ATBS sodium salt:**

The crystals of ATBS.Na contained in the suspension $S_1$ obtained at the end of step 2) are isolated in a solid-liquid separation step and are in the form of a composition $C_1$.

The solid-liquid separation step can be carried out using various technologies. Examples include, but are not limited to, the use of a centrifuge, a decanter, a filter press, an agitated filter, a belt filter, a disc filter or a rotary drum filter. The solid-liquid separation is preferably carried out using a centrifuge. The solid-liquid separation may also be carried out by gravitational settling.

Step 3) is advantageously carried out at a temperature of between -20 and 40°C, and preferably between -5 and 30°C.

After step 3) of solid-liquid separation, the crystals of sodium salt of ATBS are preferably not dried.

The isolated composition $C_1$ has a content of crystals of sodium salt of ATBS advantageously between 40 and 99%, preferably between 60 and 99% by weight, more preferably between 60 and 98% by weight and even more preferably between 80 and 99% by weight relative to the weight of the composition $C_1$. The remainder of the composition $C_1$ may be water and/or solubilized sodium salt of ATBS, and possibly sodium salt base introduced in step 1).

At the end of this step 3), the crystals are characterized as being crystals of ATBS sodium salt.

In one particular embodiment, all or part of the liquid phase obtained following the solid-liquid separation is used in the aqueous solution or aqueous suspension $SA_2$ of step 1).

During step 4), the pH is advantageously controlled between 6 and 14, preferably between 8 and 14, more preferably between 10 and 14, even more preferably between 12 and 14, and even more preferably between 13 and 14.

**Step 4) of the method for producing the crystalline form of the ATBS.Na:**

In an optional step 4), the composition $C_1$ containing the crystals of ATBS.Na obtained at the end of step 3) is washed using a washing solution.

The washing solution may be water, an aqueous solution of a sodium salt base (which may or may not be saturated), or a solution (which may or may not be saturated) of ATBS sodium salt (advantageously in the crystalline form of ATBS.Na), and it is preferably a saturated solution of ATBS.Na.

Examples of solutions of sodium salt base include a solution of sodium hydroxide, sodium carbonate, sodium bicarbonate or mixtures thereof.

The washing solution may comprise one or more organic solvents.

The quantity of organic solvent may vary as a function of the temperature and the quantity of sodium salt of ATBS or the quantity of sodium salt.

Advantageously, the washing solution does not comprise organic solvent.

As already indicated in step 1), the organic solvent is advantageously chosen from organic acids, amides, alcohols, ketones, ethers, esters, alkanes, halogenated hydrocarbon compounds, nitriles, or mixtures thereof. The organic solvent is preferably chosen from acrylonitrile, isopropanol, acetic acid or mixtures thereof. More preferably, the organic solvent is acrylonitrile.

In one particular embodiment, the composition $C_1$ obtained at the end of step 3) is washed by spraying washing solution over said composition $C_1$.

In one particular embodiment, the composition $C_1$ obtained at the end of step 3) is washed by placing the composition $C_1$ in suspension in the washing solution.

The weight ratio of the aqueous washing solution to the composition $C_1$ obtained at the end of step 3) is advantageously between 0.05:1 and 10:1 and more preferably between 0.1:1 and 5:1.

This washing step is advantageously carried out at a temperature of between -5 and 40°C, and preferably between 0 and 30°C. A person skilled in the art knows how to adjust the temperature so as not to solubilize the crystals of ATBS sodium salt.

The crystals of ATBS sodium salt obtained at the end of this optional step 4) can be isolated from the washing solution by a solid-liquid separation step, in the form of a composition $C_2$.

The solid-liquid separation step can be carried out using various technologies. Examples include, but are not limited to, the use of a vertical or horizontal centrifuge, a decanter, a filter press, a belt filter, a disc filter, a push filter or a rotary drum filter. The solid-liquid separation may also be carried out by gravitational settling.

In one particular embodiment, all or part of the recovered washing solution may be used again in step 4), with or without a prior treatment step.

In one particular embodiment, all or part of the recovered washing solution may be used in the aqueous solution or aqueous suspension $SA_2$ in step 1), with or without a prior treatment step.

The pH of the washing solution of step 5 is advantageously controlled between 6 and 14, and preferably between 8 and 14.

**Step 5) of the method for producing the crystalline form of the ATBS.Na:**

In an optional step 5), the composition $C_1$ obtained at the end of step 3) or the composition $C_2$ obtained at the end of step 4) is dried.

The drying step can be carried out using various technologies. Examples include, but are not limited to, the use of all convection, conduction or radiation drying technologies (fluidized bed dryer, through-bed dryer, drying by conveyor belt, microwave, heated agitated filter, high-frequency radiation, infrared radiation, spraying).

The drying operation may be carried out at atmospheric pressure or else under vacuum.

The drying step may be carried out discontinuously (batch drying) or continuously.

**Other steps of the method for producing the crystalline form of ATBS.Na:**

During the production method, i.e., during steps 1) to 5), and regardless of the step, at least one polymerization inhibitor may be introduced in order to prevent the possible polymerization of the ATBS or its salt. This inhibitor may be chosen, in a non-limiting manner, from hydroquinone, paramethoxyphenol, phenothiazine, 2,2,6,6-tetramethyl(piperidin-1-yl)oxyl, 4-hydroxy-2,2,6,6-tetramethyl(piperidin-1-yl)oxyl, phenylene diamine derivatives, or mixtures thereof.

The inhibitor is preferably paramethoxyphenol or 4-hydroxy-2,2,6,6-tetramethyl(piperidin-1-yl)oxyl.

The quantity of inhibitor that is introduced relative to the quantity of ATBS introduced in step 1) is advantageously between 0.001% and 5% by weight, and more preferably between 0.01% and 1% by weight.

The inhibitor may be introduced during any one or more of the steps of the method. An additional quantity of it is preferably introduced during step 1). More preferably, the inhibitor is part of the aqueous solution or aqueous suspension $SA_2$ introduced in step 1).

The production method (steps 1) to 5)) may be carried out continuously or discontinuously (batch production).

**Composition of the water-soluble polymer**

The water-soluble polymer is obtained from the crystalline form of ATBS.Na, and advantageously from at least one other monomer which may be chosen from hydrophilic non-ionic monomers and/or hydrophilic anionic monomers and/or hydrophilic cationic monomers and/or hydrophilic zwitterionic monomers and/or hydrophobic monomers and mixtures thereof. It may therefore be a polymer of several distinct monomers or a homopolymer.

Advantageously, the hydrophilic non-ionic monomer or monomers that can be used in the invention are chosen, in particular, from the group comprising water-soluble vinyl monomers such as acrylamide, methacrylamide, N-alkylacrylamides, N-alkylmethacrylamides, N,N-dialkyl acrylamides (e.g. N,N-dimethylacrylamide or N,N-diethylacrylamide), N,N-dialkylmethacrylamides, alkoxylated esters of acrylic acid, N-vinylpyrrolidone, N-methylol(meth)acrylamide, N-vinyl caprolactam, N-vinylformamide (NVF), N-vinyl acetamide, N-vinyl imidazole, N-vinyl succinimide, acryloyl morpholine (ACMO), glycidyl methacrylate, vinyl acetate, glyceryl methacrylate, diacetone acrylamide, methacrylic anyhydride, acrylonitrile, maleic anydride, itaconamide, hydroxyalkyl (meth)acrylate, thioalkyl (meth)acrylate, isoprenol and its alkoxylated derivatives, hydroxyethyl (meth)acrylates and their alkoxylated derivatives, hydroxypropylacrylate and its alkoxylated derivatives, and mixtures thereof. Among non-ionic monomers, the alkyl groups are advantageously $C_1$-$C_5$, and more advantageously $C_1$-$C_3$. They are preferably linear alkyls. Preferably, the hydrophilic non-ionic monomer is acrylamide.

The polymer water-soluble advantageously comprises between 0 and 99 mol% of non-ionic monomer(s), preferably between 5 and 99 mol%, more preferably between 25 and 99 mol%.

Advantageously, apart from the ATBS.Na in crystalline form, the hydrophilic anionic monomer or monomers which can be used in the invention can be chosen from a large group. These monomers may have vinyl functions (advantageously acrylic, maleic, fumaric, malonic, itaconic, or allylic), and contain a carboxylate, phosphonate, phosphate, sulphate or sulphonate group, or another anionically charged group. Examples of suitable monomers include acrylic acid; methacrylic acid; dimethylacrylic acid; itaconic acid; C1-C3 hemiesters of itaconic acid; acryloyl chloride; crotonic acid; maleic acid; fumaric acid; 3-acrylamido-3-methylbutanoic acid; strong acid monomers with, for example, a sulfonic acid or phosphonic acid function, such as vinylsulfonic acid, vinylphosphonic acid, allylsulfonic acid, methallylsulfonic acid, 2-methylidenepropane-1,3-disulfonic acid, 2-sulfoethylmethacrylate, sulfopropylmethacrylate, sulfopropylacrylate, allylphosphonic acid, ethylene glycol methacrylate phosphate, 2-acrylamido-2-methylpropane sulfonic acid (ATBS), 2-acrylamido-2-methylpropane disulfonic acid, 3-allyloxy-2-hydroxypropane sulfonic acid, diethylallylphosphonate, carboxyethyl acrylate; water-soluble salts of these monomers such as their alkali metal salts (distinct from the ATBS.Na in crystalline form), alkaline-earth metal salts or ammonium salts; and mixtures thereof. Preferably, the hydrophilic anionic monomer or monomers is acrylic acid and/or its salts.

The water-soluble polymer advantageously comprises between 1 and 100 mol% of anionic hydrophilic monomer(s) (distinct from the crystalline form of ATBS.Na), preferably between 5 and 60 mol%, more preferably between 10 and 50 mol%, these percentages including the monomer corresponding to the crystalline form of ATBS sodium salt.

In one particular embodiment, the anionic hydrophilic monomer(s), apart from ATBS.Na in the crystalline form, may be salified.

By salified, we mean the substitution of a proton of at least one acid function of the-$R^a$(=O)-OH type (with R representing P, S or C) of the anionic monomer by a metal or ammonium cation to form a salt of the -$R^a$(=O)-OX type (X being a metal cation or an organic cation). In other words, the non-salified form corresponds to the acid form of the monomer, for example $R^b$-C(=O)-OH in the case of the carboxylic acid function, while the salified form of the monomer corresponds to the $R^b$-C(=O)-$O^-$ $X^+$ form, $X^+$ corresponding to an alkaline cation or an organic cation. The salification of the acid functions of the branched water-soluble polymer can be partial or total. The salified form advantageously corresponds to the salts of alkali metals (Li, Na, K, etc.), alkaline-earth metals (Ca, Mg, etc.) or ammonium (for example the ammonium ion or a tertiary ammonium). The preferred salt is sodium salt.

The salification may take place before, during or after polymerization.

In a particular embodiment, the water-soluble polymer advantageously comprises between 1 and 100 mol% of anionic monomer(s) in salified form, preferably between 20 and 100 mol%, more preferably between 50 and 100 mol% and even more preferably between 80 and 100 mol%.

Advantageously, the hydrophilic cationic monomer or monomers that can be used in the invention are chosen from monomers derived from vinyl-type units (advantageously acrylamide, acrylic, allylic or maleic), these monomers having a phosphonium or quaternary ammonium function. Mention may be made, in particular and in non-limiting manner, diallyldialkyl ammonium salts such as diallyl dimethyl ammonium chloride (DADMAC); acidified or quaternized salts of dialkylaminoalkyl(meth)acrylamides, e.g. methacrylamido-propyl trimethyl ammonium chloride (MAPTAC), acrylamido-propyl trimethyl ammonium chloride (APTAC); acidified or quaternized salts of dialkylaminoalkyl acrylate, such as quaternized or salified dimethylaminoethyl acrylate (DMAEA); acidified or quaternized salts of dialkylaminoalkyl methacrylate, such as quaternized or salified dimethylaminoethyl methacrylate (DMAEMA); acidified or quaternized salts of N,N-dimethylallylamine; acidified or quaternized salts of diallylmethylamine; acidified or quaternized salts of diallylamine; vinylamine obtained by the hydrolysis (basic or acid) of an amide group $-N(R_2)-CO-R_1$ with $R_1$ and $R_2$ being, independently, a hydrogen atom or an alkylated chain of 1 to 6 carbons, for example vinylamine obtained from the hydrolysis of vinylformamide; vinylamine obtained by Hofmann degradation; and mixtures thereof. Advantageously, the alkyl groups are $C_1$-$C_7$, preferably $C_1$-$C_3$, and can be linear, cyclic, saturated or unsaturated chains. Preferably quaternized dimethylaminoethyl acrylate.

A person skilled in the art knows how to prepare quaternized monomers, for example using a quaternizing agent of the R-X type, where R is an alkyl group and X is a halogen or sulfate.

The term "quaternizing agent" refers to a molecule capable of alkylating a tertiary amine.

The quaternizing agent may be chosen from dialkyl sulfates containing from 1 to 6 carbon atoms or alkyl halides containing from 1 to 6 carbon atoms. Preferably, the quaternizing agent is chosen from methyl chloride, benzyl chloride, dimethyl sulfate or diethyl sulfate. In addition, the present invention also covers DADMAC, APTAC and MAPTAC monomers whose counterion is a sulfate, fluoride, bromide or iodide instead of chloride.

The water-soluble polymer advantageously comprises between 0 and 20 mol% cationic monomer(s), preferably between 0 and 6 mol%.

Advantageously, the zwitterionic hydrophilic monomer(s) may be a derivative of a vinyl-type unit (advantageously acrylamide, acrylic, allylic or maleic), this monomer having a quaternary amine or ammonium function and a carboxylic (or carboxylate), sulphonic (or sulphonate) or phosphoric (or phosphate) acid function. Mention may be made, in particular and in a non-limiting manner, of dimethylaminoethyl acrylate derivatives, such as 2-((2-(acryloyloxy)ethyl) dimethylammonio) dimethylammonio) ethane-1-sulphonate, 3-((2-(acryloyloxy)ethyl) dimethylammonio) propane-1-sulphonate, 4-((2-(acryloyloxy)ethyl) dimethylammonio) butane-1-sulphonate, [2-(acryloyloxy)ethyl] (dimethylammonio) acetate, dimethylaminoethyl methacrylate derivatives, such as 2-((2-(methacryloyloxy) ethyl) dimethylammonio) ethane-1-sulphonate, 3-((2-(methacryloyloxy) ethyl) dimethylammonio) propane-1-sulphonate, 4-((2-(methacryloyloxy) ethyl) dimethylammonio) butane-1-sulphonate, [2-(methacryloyloxy)ethyl] (dimethylammonio) acetate, dimethylamino propylacrylamide derivatives, such as 2-((3-acrylamidopropyl) dimethylammonio) ethane-1-sulphonate, 3-((3-acrylamidopropyl) dimethylammonio) propane-1-sulphonate, 4-((3-acrylamidopropyl) dimethylammonio) butane-1-sulphonate, [3-(acryloyloxy) propyl] (dimethylammonio) acetate, dimethylamino propyl methylacrylamide derivatives such as 2-((3-methacrylamidopropyl) dimethylammonio) ethane-1-sulphonate, 3-((3-methacrylamidopropyl) dimethylammonio) propane-1-sulphonate, 4-((3-methacrylamidopropyl) dimethylammonio) butane-1-sulphonate and [3-(methacryloyloxy)propyl] (dimethylammonio) acetate and mixtures thereof.

Other hydrophilic zwitterionic monomers can be used, in particular those described by the Applicant in document WO2021/123599.

The water-soluble polymer advantageously comprises between 0 and 20 mol% zwitterionic monomer(s), more preferably between 0 and 10 mol%.

Hydrophobic monomers with a coefficient partition $K_{ow}$ greater than 1 can also be used in the preparation of the polymer according to the invention. They are preferably chosen from the following list: : (meth)acrylic acid esters with a (i) $C_4$-$C_{30}$ alkyl, or (ii) arylalkyl ($C_4$-$C_{30}$ alkyl, $C_4$-$C_{30}$ aryl), or (iii) propoxylated, or (iv) ethoxylated, or (v) ethoxylated and propoxylated chain; alkyl aryl sulfonates ($C_4$-$C_{30}$ alkyl, $C_4$-$C_{30}$ aryl) ; mono- or disubstituted (meth)acrylamide amides bearing a (i) $C_4$-$C_{30}$ alkyl, or (ii) arylalkyl ($C_4$-$C_{30}$ alkyl, $C_4$-$C_{30}$ aryl), or (iii) propoxylated, or (iv) ethoxylated, or (v) ethoxylated and propoxylated chain; anionic or cationic monomer derivatives of (meth)acrylamide or (meth)acrylic acid bearing a hydrophobic chain; vinylpyridine and mixtures thereof. The hydrophobic monomers may comprise halogen atoms, for example chlorine.

Among these hydrophobic monomers:

- alkyl groups are preferably $C_4$-$C_{20}$, more preferably $C_4$-$C_8$. The $C_6$-$C_{20}$ alkyls are preferably linear, while the $C_4$-$C_5$ alkyls are preferably branched,
- arylalkyl groups are preferably $C_7$-$C_{25}$, more preferably $C_7$-$C_{15}$,
- the ethoxylated chains advantageously comprise between 1 and 200 $-CH_2-CH_2-O-$groups, preferably between 6 and 100, more preferably between 10 and 40,
- the propoxylated chains advantageously comprise between 1 and 50 $-CH_2-CH_2-CH_2-O-$groups, more preferably

between 1 and 20.

Preferred hydrophobic monomers belonging to these classes are, for example:

- n-hexyl (meth)acrylate, n-octyl (meth)acrylate, octyl (meth)acrylamide, lauryl (meth)acrylate, lauryl (meth)acrylamide, myristyl (meth)acrylate, myristyl (meth)acrylamide, pentadecyl (meth)acrylate, pentadecyl (meth)acrylamide, cetyl (meth)acrylate, cetyl (meth)acrylamide, oleyl (meth)acrylate, oleyl (meth)acrylamide, erucyl (meth)acrylate, erucyl (meth)acrylamide, N-tert-Butyl (meth)acrylamide, 2-ethylhexyl acrylate, $C_4$-$C_{22}$ itaconic acid hemiesters, acidified or quaternized salts of $C_4$-$C_{22}$ dialkylaminoalkyl (meth)acrylate, acidified or quaternized salts of $C_4$-$C_{22}$ dialkylaminoalkyl (meth)acrylamides, vinylpyridine, acrylamido undecanoic acid, and mixtures thereof,
- cationic allyl derivatives of formula (I) or (II):

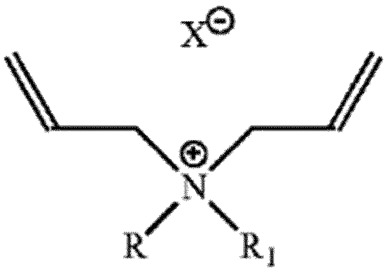

(I)

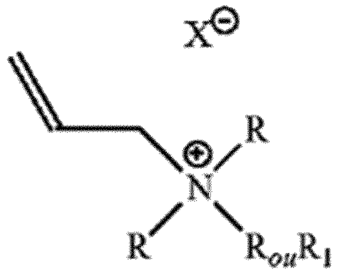

(II)

in which:

R: independently an alkyl chain containing 1 to 4 carbons;
$R_1$: an alkyl or arylalkyl chain containing 8 to 30 carbons;
X: a halide selected from the group consisting of bromides, chlorides, iodides, fluorides and any negatively charged counterion;
and, preferably, hydrophobic cationic derivatives of the (meth)acryloyl type corresponding to formula (III):

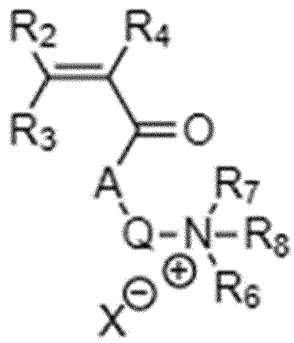

(III)

in which:

- A represents O or N-$R_5$ (preferably A represents N-$R_5$),
- $R_2$, $R_3$, $R_4$, $R_5$, $R_6$, $R_7$: independently hydrogen or an alkyl chain containing 1 to 4 carbons,
- Q: an alkyl chain containing 1 to 20 carbons,
- $R_8$: an alkyl or arylalkyl chain containing 8 to 30 carbons,
- X: a halide selected from the group consisting of bromides, chlorides, iodides, fluorides, and any negatively charged counterion.

The water-soluble polymer advantageously comprises less than 5 mol% hydrophobic monomers.
When the water-soluble polymer comprises hydrophobic monomers, they are present in an amount such that the polymer remains soluble in water.

Monomers having a fluorescent function can also be used in the invention. A monomer with a fluorescent function may be detected by any suitable method, for example by fluorometry with a fixed wavelength fluorometer. Generally, the monomer with a fluorescent function is detected at the excitation and emission maxima, which can be determined using a scanning fluorometer.

Monomers with a fluorescent function are chosen, for example, from the following monomers: sodium or potassium styrene sulfonate, styrene sulfonic acid, vinylimidazole and its derivatives, 9-vinyl anthracene and its derivatives, N-9-xanthenylacrylamide and its derivatives, allyl dibenzosuberenol and its derivatives, chinconicin and its derivatives, quininone and its derivatives, cinchoninone and its derivatives, N,N-dimethyl-N-[3-[N'-(4-m'thoxy naphthalimide)]]propyl-N-(2-hydroxy-3-allyloxy)propyl ammonium hydroxide and mixtures thereof.

Other fluorescent compounds can be used when functionalized with an allyl, vinyl or acrylic double bond, such as pyranine and its derivatives, coumarin and its derivatives, quinolaxine and its derivatives, pinacyanol and its derivatives, xanthydrol and its derivatives, dabsyl and its derivatives, 3-hydroxy-2-methylene-3-(1-naphthyl)propionic acid and its derivatives, rhodamine and its derivatives, N-dibenzosuberylacrylamide and its derivatives, naphthalic derivatives, fluorescein and its derivatives, pyrene and its derivatives, carbostyril and its derivatives, pyrazoline and its derivatives and mixtures thereof.

In a preferred mode, the polymer does not comprise a monomer with a fluorescent function.

In one particular embodiment according to the invention, the water-soluble polymer may comprise at least one cyclic monomer with a hydrolyzable function. Advantageously, the or the cyclic monomers with a hydrolyzable function are chosen from cyclic ketene acetals, thionolactones and mixtures thereof.

The cyclic ketene acetal is advantageously chosen from: 2-methylene-1,3-dioxepane (MDO), 5,6-benzo-2-methylene-1,3-dioxepane (BMDO), 2-methylene-4-phenyl-1,3-dioxolane (MPDL), 2-methylene-1,3,6-trioxocane (MTC), and mixtures thereof. Preferably, it is 2-methylene-1,3-dioxepane (MDO).

The thionolactone is advantageously chosen from: dibenzo[c,e]oxepine(7H)-5-thione (DOT), ε-thionocaprolactone, 3,3-dimethyl-2,3-dihydro-5H-benzo[e][1,4]dioxepine-5-thione (DBT) and mixtures thereof. Preferably, it is 3,3-dimethyl-2,3-dihydro-5Hbenzo[e][1,4]dioxepine-5-thione.

In one particular embodiment in accordance with the invention, the water-soluble polymer may comprise at least one group with an LCST.

According to the general knowledge of a person skilled in the art, a group with an LCST corresponds to a group whose water solubility, for a given concentration, is modified above a certain temperature and as a function of salinity. It is a group with a heating transition temperature that defines its lack of affinity with the solvent medium. The lack of affinity with the solvent results in opacification or loss of transparency, which may be due to precipitation, aggregation, gelation or viscosification of the medium. The minimum transition temperature is known as the LCST (Lower Critical Solution Temperature). For each concentration a group with an LCST, a heating transition temperature is observed. It is higher than the LCST, which is the minimum point on the curve. Below this temperature, the polymer is soluble in water; above this temperature, the polymer loses its solubility in water.

In one particular embodiment in accordance with the invention, the water-soluble polymer may comprise at least one group with an UCST.

According to the general knowledge of a person skilled in the art, a group with a UCST corresponds to a group whose water solubility, for a given concentration, is modified below a certain temperature and as a function of salinity. It is a group with a cooling transition temperature that defines its lack of affinity with the solvent medium. The lack of affinity with the solvent results in opacification or loss of transparency, which may be due to precipitation, aggregation, gelation or viscosification of the medium. The maximum transition temperature is known as the UCST (Upper Critical Solution Temperature). For each concentration a group with a UCST, a cooling transition temperature is observed. It is lower than the UCST, which is the maximum point on the curve. Above this temperature, the polymer is soluble in water; below this temperature, the polymer loses its solubility in water.

The quantities of the different monomer(s) will be adjusted by a person skilled in the art in order not to exceed 100 mol% when preparing the water-soluble polymer.

**Water-soluble polymer**

The 2-acrylamido-2-methylpropane acid used to obtain the water-soluble polymer is advantageously at least 50 mol% in the crystalline form of ATBS.Na before polymerization, preferably between 70 and 100 mol%. More preferably, 100 mol% of ATBS that is used is in the crystalline form of ATBS.Na.

In a particular embodiment according to the invention, the water-soluble polymer comprises between 1 and 100 mol% of ATBS, preferably between 5 and 100 mol% of ATBS, even more preferably between 25 and 100 mol% of ATBS; advantageously with at least 50 mol% of the ATBS used in the crystalline form of ATBS.Na, preferably between 70 and 100 mol%. More preferably, 100 mol% of the ATBS that is used is in the crystalline form of the ATBS.Na.

In a preferred embodiment according to the invention, the water-soluble polymer contains only anionic monomer

units and non-ionic monomer units. In other words, it is preferably obtained from at least one anionic hydrophilic monomer and at least one non-ionic hydrophilic monomer.

In a particular embodiment according to the invention, the water-soluble polymer is an acrylamide and ATBS-based polymer, at least 50 mol% of the ATBS used being, before polymerization, in the crystalline form of ATBS.Na. Preferably, the water-soluble polymer is a polymer consisting of acrylamide, acrylic acid and ATBS, at least 50 mol% of the ATBS being, before polymerisation, in the crystalline form of ATBS.Na.

In a preferred embodiment according to the invention, the water-soluble polymer is a homopolymer of ATBS with at least 50 mol% of the ATBS used in the crystalline form of ATBS.Na.

The water-soluble polymer may be partially or totally post-hydrolyzed.

According to the invention, the water-soluble polymer may have a linear, branched, crosslinked, star-shaped or comb-shaped structure. This structure can be obtained, according to the general knowledge of a person skilled in the art, for example by selecting the initiator, the transfer agent, the polymerisation technique such as the controlled radical polymerisation called RAFT (Reversible-Addition Fragmentation chain Transfer), NMP (Nitroxide Mediated Polymerisation) or ATRP (Atom Transfer Radical Polymerization), of the incorporation of structural monomers, or of the concentration.

The water-soluble polymer may further by structured by a branching agent. A structured polymer is a non-linear polymer that has side chains such that, when dissolved in water, the polymer has a high degree of entanglement leading to very high low-gradient viscosities.

The branching agent is advantageously chosen from:

- structural agents, which can be chosen from the group comprising polyethylenically unsaturated monomers (having at least two unsaturated functions), such as vinyl functions, in particular allyl or acrylic functions, and we can cite for example methylene bis acrylamide (MBA), triallyamine, or tetraallylammonium chloride or 1,2 dihydroxyethylene bis-(N-acrylamide),
- monomers with at least two epoxy functions,
- monomers with at least one unsaturated and one epoxy function,
- macroinitiators such as polyperoxides, polyazoids and transfer agents such as polymercaptant polymers, and polyols,
- functionalized polysaccharides,
- water-soluble metal complexes composed of:

    * a metal with a valence greater than 3, such as, by way of example and non-limitation, aluminum, boron, zirconium or titanium, and
    * a ligand bearing a hydroxyl function.

The quantity of branching agent in the water-soluble polymer is advantageously less than 40,000 ppm, relative to the total weight of the monomers of the water-soluble polymer, preferably less than 10,000 ppm, and more preferably less than 5,000 ppm.

In one particular embodiment, the quantity of branching agent is at least equal to 0.1 ppm relative to the total weight of the monomers of the water-soluble polymer, preferably at least 1 ppm.

When the water-soluble polymer comprises a branching agent, the polymer remains soluble in water. A person skilled in the art knows how to adjust the quantity of branching agent and, possibly, the quantity of transfer agent needed to obtain this result.

In a preferred embodiment according to the invention, the water-soluble polymer does not comprise branching agent.

In one particular embodiment according to the invention, the water-soluble polymer comprises a transfer agent.

The transfer agent is advantageously chosen from methanol; isopropyl alcohol; sodium hypophosphite; calcium hypophosphite; magnesium hypophosphite; potassium hypophosphite; ammonium hypophosphite; formic acid; sodium formate; calcium formate; magnesium formate; potassium formate; ammonium formate; 2-mercaptoethanol; 3-mercaptopropanol; dithiopropylene glycol; thioglycerol; thioglycolic acid; thiohydracrylic acid; thiolactic acid; thiomalic acid; cysteine; aminoethanethiol; thioglycolates; allyl phosphites; allyl mercaptans, such as n-dodecyl mercaptan; sodium methallysulfonate; calcium methallysulfonate; magnesium methallysulfonate; potassium methallysulfonate; ammonium methallysulfonate; alkyl phosphites such as trialkyl ($C_{12}$-$C_{15}$) phosphites, di-oleyl-hydrogen phosphites, dibutyl phosphite; dialkyldithiophosphates such as dioctyl phosphonate; tertiary nonylmercaptan; 2-ethylhexyl thioglycolate; n-octyl mercaptan; n-dodecyl mercaptan; tertiary-dodecyl mercaptan; iso-octylthioglycolate; 2-ethylhexyl thioglycolate; 2-ethylhexyl mercaptoacetate; polythiols; and mixtures thereof. Preferably sodium hypophosphite or sodium formate.

The quantity of transfer agent in the water-soluble polymer is advantageously between 0 and 100,000 ppm relative to the total weight of the monomers of the polymer, preferably between 0 and 10,000 ppm, more preferably between 0 and 1,000 ppm, and even more preferably between 0 and 100 ppm. When it is present, the transfer agent

represents at least 0.1 ppm relative to the total weight of the monomers of the water-soluble polymer, and preferably at least 1 ppm.

In one particular embodiment according to the invention, the water-soluble polymer does not comprise transfer agent.

Generally speaking, the water-soluble polymer does not require the development of any particular polymerization method. Indeed, it may be obtained using any of the polymerization techniques that are well known to a person skilled in the art. These include solution polymerization; gel polymerization; precipitation polymerization; emulsion polymerization (aqueous or inverse); suspension polymerization; reactive extrusion polymerization; water-in-water polymerization; or micellar polymerization.

The polymerization is generally radical polymerization, preferably by inverse emulsion polymerization or gel polymerization. Radical polymerization includes free radical polymerization using UV, azo, redox or thermal initiators, as well as controlled radical polymerization (CRP) or matrix polymerization techniques.

Controlled radical polymerization techniques include, but are not limited to, techniques such as Iodine Transfer Polymerization (ITP), Nitroxide Mediated Polymerization (NMP), Atom Transfer Radical Polymerization (ATRP), Reversible Addition Fragmentation chain Transfer (RAFT) Polymerization, which includes MADIX (MAcromolecular Design by Interchange of Xanthates) technology, various variations of Organometallic Mediated Radical Polymerization (OMRP), and OrganoHeteroatom-mediated Radical Polymerization (OHRP).

As already indicated, the water-soluble polymer may be post-hydrolyzed. Post-hydrolysis is the hydrolysis reaction of the polymer after it has been formed by polymerization of the monomer(s). This step consists in reacting hydrolysable functional groups of monomers, advantageously non-ionic functional groups, more advantageously amide or ester functional groups, with a hydrolysis agent. This hydrolysis agent may be an enzyme, an ion-exchange resin, or a Brønsted acid (for example a hydrohalogenic acid) or a Brønsted base (for example an alkali hydroxide or an alkaline-earth hydroxide). Preferably, the hydrolysis agent is a Brønsted base. During this step of post-hydrolyzing the water-soluble polymer, the number of carboxylic acid functions increases. Indeed, the reaction between the base and the amide or ester functions present in the water-soluble polymer produces carboxylate groups.

The water-soluble polymer may be in liquid, gel or solid form when its preparation includes a drying step such as spray drying, drum drying, radiation drying such as microwave drying, or drying in a fluidized bed.

The water-soluble polymer advantageously has an weight-average molecular weight of at least 1 million g/mol, preferably between 2 and 40 million g/mol, more preferably between 5 and 30 million g/mol. Molecular weight is defined as weight-average molecular weight.

The weight-average molecular weight is determined by the intrinsic viscosity of the polymer. The intrinsic viscosity can be measured by methods known to a person skilled in the art and can be calculated from the reduced viscosity values for different polymer concentrations by a graphical method consisting in plotting the reduced viscosity values (y-axis) against the concentration (x-axis) and extrapolating the curve to zero concentration. The intrinsic viscosity value is plotted on the y-axis or using the least-squares method. The molecular weight can then be determined using the Mark-Houwink equation:

$$[\eta] = K.M^{\alpha}$$

$[\eta]$ represents the intrinsic viscosity of the polymer as determined by the solution viscosity method.
K represents an empirical constant.
M represents the molecular weight of the polymer.
$\alpha$ represents the Mark-Houwink coefficient.
K and $\alpha$ depend on the particular polymer-solvent system.

The water-soluble polymer advantageously has a filter ratio referred to as FR of less than 1.5, preferably less than 1.3 and more preferably less than 1.1.

The term "filter ratio" is used in the present document to denote a test used to determine the performance of the polymer solution under conditions resembling the permeability of the deposit, which consists in measuring the time taken by given volumes/concentrations of solution to pass through a filter. The FR generally compares the filterability of the polymer solution for two consecutive equivalent volumes, which indicates the tendency of the solution to clog the filter. Lower FR's indicate better performance.

The test used to determine the FR involves measuring the time taken for given volumes of 1000 ppm (by weight) polymer solution to flow through a filter. The solution is contained in a cell pressurized to two bars and the filter is 47 mm in diameter and has a defined pore size. The FR is typically measured using filters with a pore size of 1.2 $\mu$m, 3 $\mu$m, 5 $\mu$m or 10 $\mu$m.

The times needed to obtain 100 ml ($t_{100ml}$); 200 ml ($t_{200ml}$) and 300 ml ($t_{300ml}$) of filtrate are measured, and an FR

is then defined as:

[Math 2]

$$FR = \frac{t_{300\ ml} - t_{200\ ml}}{t_{200\ ml} - t_{100\ ml}}$$

Times are measured to the nearest 0.1 second.

The FR thus represents the capacity of the polymer solution to clog the filter for two consecutive equivalent volumes.

The polymers used according to the invention have improved resistance to chemical and thermal degradation compared with polymers of equivalent molecular weight obtained from ATBS which is not in the crystalline form of the sodium salt.

The test used to determine resistance to chemical degradation involves preparing a solution of polymer at a given concentration in a given brine under aerobic conditions and bringing it into contact with a chemical contaminant such as iron or hydrogen sulphide. The viscosity of the polymer solution is measured before and after 24 hours of exposure to the contaminant. The viscosity measurements are carried out under the same temperature and shear gradient conditions.

The test used to determine resistance to mechanical degradation involves preparing a solution of polymer at a given concentration in a brine of given composition under anaerobic conditions (using an inert glove box, inerted with nitrogen, for example) and allowing it to age in a stainless steel cell set to a given temperature for a predefined time. The stainless steel cell is then cooled to room temperature and the viscosity of the polymer solution it contains is measured and compared with its initial value. All handling of the stainless steel cell is carried out inside the glove box to avoid exposure to oxygen. The stainless steel cells are sealed to prevent oxygen from entering the solution during heat ageing. The viscosity measurements before and after ageing are carried out in a glove box under the same temperature and speed gradient conditions.

Resistance to chemical and thermal degradation is quantified by the viscosity loss value expressed in percent and determined at the end of the test by:

[Math 3]

$$Viscosity\ loss\ (\%) = \frac{Viscosity_{initial} - Viscosity_{final}}{Viscosity_{initial}} \text{ x } 100$$

**Method for enhanced hydrocarbon (oil and/or gas) recovery**

The invention relates to a method for enhanced hydrocarbon (oil and/or gas) recovery comprising the following steps:

a) Preparing an injection fluid comprising at least one water-soluble polymer of ATBS, with water or brine;
the ATBS being, prior to polymerization, a crystalline form of ATBS sodium salt (ATBS.Na ) having an X-ray powder diffraction pattern comprising peaks at 11.7°; 12.2°; 13.2°; 13.5°; 15.6°; 16.8°; 17.8°; 18.5°; 19.1°; 20.6°; 21.4°; 23.3°; 25.1°; 25.8°; 26.9°; 29.1°; 29.5°; 31.0°; 33.0°; 33.6°; 34.4°; 35.2°; 35.9°; 37.1°; 38.4°; 39.6°; 41.1°; 42.9°; 45.1°; 46.0°; 47.2°; 47.6° 2-theta angles;
b) Injecting the injection fluid into a subterranean formation;
c) Sweeping the subterranean formation using the injected fluid;
d) Recovering an aqueous hydrocarbon mixture.

When the water-soluble polymer implemented in the preparation of the injection fluid is in the form of powder, the average size of the particles of water-soluble polymer is advantageously less than 1.5 mm, and preferably less than 850 µm. The average size of the particles of water-soluble polymer is advantageously greater than 5 µm.

The average size of the particles of water-soluble polymer is the average size of the largest dimension, for example the diameter in the case of spherical particles. It is advantageously measured using a laser measuring device using conventional techniques that are part of the knowledge of a person skilled in the art. For example, a Malvern Mastersizer, the MS2000, for example, could be used for this purpose. An apparatus of this type can be used to measure,

by laser diffraction, the particle-size distribution of particles in a liquid medium or in solid form.

When the water-soluble polymer is in the form of particles, it may be dissolved in an aqueous medium in a dispersion device. The Polymer Slicing Unit (PSU) described in document US 8,186,871 is one example of a dispersion device that can be used to prepare a concentrated aqueous polymer solution.

The water or brine used to prepare the injection fluid may be production water. "Production water" refers to all saline or non-saline water, brine, seawater or aquifer water from a hydrocarbon reservoir. This production water may be treated before the injection fluid is prepared, as described in patent application WO 2018/020175.

The water-soluble polymers may be combined with stabilizing compounds. The stabilizing compounds (stabilizing agents) may be compounds that suitably protect the polymers, for example against thermal, chemical and/or mechanical degradation. Examples of suitable stabilizing agents are provided in patent application WO 2010/133258.

Depending on the techniques used, the injection fluid comprising the water-soluble polymer is injected on its own or in combination with one or more chemical compounds that can be used for enhanced hydrocarbon (oil and/or gas) recovery. These chemical compounds include the use of weak, strong or super-strong mineral or organic bases that can saponify crude oil and produce surface-active species in-situ that solubilize hydrocarbons, in particular oil. Examples include sodium or potassium carbonate, caustic soda, borate and metaborate compounds, amines and basic polymeric species. Another family of compounds commonly injected with polymers is that of surface-active compounds, which are often anionic, zwitterionic, cationic and sometimes non-ionic. These compounds are rarely injected pure, but generally with a co-surfactant and a cosolvent to improve their compatibility and effectiveness in the reservoir (subterranean formation).

The injection fluid advantageously comprises between 10 and 15,000 ppm by weight of water-soluble polymer, preferably between 50 and 10,000 ppm, and more preferably between 100 and 5,000 ppm.

Surprisingly the Applicant has discovered that the water-soluble polymers obtained from the crystalline form of ATBS sodium salt have better filterability and better resistance to chemical and thermal degradation than polymers of equivalent molecular weight obtained from ATBS that is not in the crystalline form of the sodium salt. It is also known that filterability deteriorates as the molecular weight of the polymer increases. One of the advantages of the invention lies in the possibility of obtaining water-soluble polymers of very high molecular weight which, at the same time, exhibit good filterability. In addition, the concentration of water-soluble polymer required to bring the injection fluid to a target viscosity is reduced, which improves the economic conditions for recovering the hydrocarbons (oil and/or gas) contained in the subterranean formation.

The purpose of the water-soluble polymers according to the invention is to viscosify the water injected into reservoirs (subterranean formations) containing hydrocarbons (oil and/or gas) in order to ensure mobility control without the need for cross-linking, i.e., chemical interchain bridging.

In one particular embodiment, the method for enhanced hydrocarbon (oil and/or gas) recovery comprises the following steps :

a) Preparing an injection fluid comprising a water-soluble polymer with a molecular weight greater than 5 million g/mol:

- the injection fluid having a salt concentration greater than 100 g/l, including, at most, 50 g/l of divalent salt(s);
- the polymer comprising at least 80% mol of ATBS in which, advantageously, at least 50 mol% of the ATBS, preferably at least 70 mol% and more preferably 100 mol% is, before polymerization, in the crystalline form of ATBS.Na;
- the concentration of water-soluble polymer in the injection fluid being less than 3,000 ppm by weight;
- the injection fluid having a viscosity $V_1$ before the shearing step b);

b) Shearing the injection fluid in order to obtain a drop in viscosity of more than 25% relative to $V_1$, in which:

[Math 4]

$$\frac{V2 - V_{water}}{V_{water}} \geq 3$$

where,

V1 is the viscosity of the injection fluid before the shearing step at the temperature of the formation;
$V_2$ is the viscosity of the injection fluid after the shearing step at the temperature of the formation;
$V_{water}$ is the viscosity of the water used to prepare the injection fluid at the temperature of the formation;

c) Injecting the injection fluid into a subterranean formation,
the subterranean formation being a carbonate formation with a permeability of less than 300 millidarcy and a temperature greater than 100°C;
d) Sweeping the subterranean formation using the injected fluid;
e) Recovering an aqueous hydrocarbon (oil and/or gas) mixture.

The shearing step may be carried out, for example, using a valve, a port or a pump.
Preferably, the concentration of divalent salt(s) in the injection fluid is between 3 and 50 g/l.
Carbonate formations are sedimentary rock formations with a carbonate composition of at least 50%.
The invention and its advantages will be better understood in the light of the following figures and examples provided in order to illustrate the invention in a non-limiting manner.

**Description of the figures**

Figure 1 shows the proton NMR spectrum of ATBS needle-shape crystals obtained according to Example 1.

Figure 2 shows the proton NMR spectrum of ATBS.Na crystals obtained according to Example 2a.

Figure 3 shows the X-ray diffraction pattern of the ATBS crystals obtained according to Example 1.

Figure 4 shows the X-ray diffraction pattern of the ATBS.Na crystals obtained according to Example 2a.

Figure 5 shows the Fourier-transform infrared spectrum of the ATBS crystals obtained in Example 1.

Figure 6 shows the Fourier-transform infrared spectrum of the ATBS.Na crystals obtained in Example 2a.

Figure 7 shows the thermogram of the ATBS crystals obtained according to Example 1.

Figure 8 shows the thermogram of the ATBS.Na crystals obtained according to Example 2a.

Figure 9 shows the effect of the ATBS form on the loss of viscosity of solutions of polymers **P3-$A_{Na}$2a** (invention) and **P'3-$A_H$** (acid form of ATBS) in contact with different amounts of iron (II) contaminant.

Figure 10 shows the effect of the ATBS form on the loss of viscosity when polymers **P6-$A_{Na}$2a** (invention) and **P'6-$A_H$** (acid form of ATBS) are aged at 90°C.

Figure 11 shows the effect of the ATBS form on the loss of viscosity of solutions of homopolymers **P6-$A_{Na}$2a** (invention) and **P'6-$A_H$** (acid form of ATBS) in contact with different amounts of iron (II) contaminant.

Figure 12 shows an optical microscope view of the ATBS crystals obtained according to Example 1.

Figure 13 shows an optical microscope view of the ATBS.Na crystals obtained according to Example 2a.

Figure 14 shows an optical microscope view of the ATBS.Na crystals obtained according to example 2b.

Figure 15 shows an optical microscope view of the ATBS.Na crystals obtained according to example 2c.

Figure 16 shows a photo of the ATBS.Na product obtained in solution according to comparative example 2a.

Figure 17 shows an optical microscope view of the ATBS.Na crystals obtained according to comparative example 2c.

Figure 18 shows an optical microscope view of the ATBS.Na crystals obtained according to comparative example 2d.

Figure 19 shows an optical microscope view of the ATBS.Na crystals obtained according to comparative example 2e.

**EXAMPLES**

### Example 1: Synthesis of the 2-acrylamido-2-methylpropanesulphonic acid (ATBS) ($A_H$)

1522 g of acrylonitrile containing 0.4% by weight of water are added to a stirred, double-jacketed 2000 ml reactor, the mixture is stirred for 1 h and cooled by the double jacket of the reactor, which keeps the temperature of the sulphonating mixture at -20°C, and then 180 g of fuming sulphuric acid with a titre of 104% $H_2SO_4$ (18% oleum) are added.
97 g of isobutylene are added to the previous sulphonating mixture at a rate of 1.6 g/min.
The temperature of the mixture is controlled at 45°C when the isobutylene is added. The particles of the 2-acrylamido-2-methylpropanesulphonic acid precipitate out of the mixture and the solids content is approximately 20% by weight. The reaction mixture is filtered through a Büchner funnel and dried under vacuum at 50°C. The solid obtained is 2-acrylamido-2-methylpropanesulphonic acid (ATBS $\mathbf{A_H}$) in the form of a very fine white powder.
Optical microscope observation (Figure 12) shows that the crystals of ATBS $\mathbf{A_H}$ have a needle-shape morphology.

### Example 2a: Formation of the crystalline form of the 2-acrylamido-2-methylpropanesulphonic acid sodium salt (ATBS.Na $A_{Na}$2a) (invention)

439 g of a 22% (by weight in water) sodium hydroxide solution are added to a stirred, double-jacketed 1000 ml reactor. 452 g of ATBS $\mathbf{A_H}$ of example 1 are added to the previous mixture.
The mixture is stirred for 30 min, at 10°C, to form an aqueous solution $SA_2$.
The aqueous solution $SA_2$ is heated to a temperature of 40°C under vacuum of 50 mbar, for 20 min, then the temperature is maintained for 30 min under a vacuum of 50 mbar and cooled to a temperature of 10°C. The cooling time between 40°C and 10°C is 6 h. A suspension $S_1$ of crystals of the ATBS.Na is obtained. The suspension $S_1$ is filtered on a Robatel vertical centrifuge. A solid of composition $C_1$ is obtained, containing 80% by weight of crystals of the ATBS.Na $\mathbf{A_{Na}2a}$.
Optical microscope observation (Figure 13) shows that the crystals $\mathbf{A_{Na}2a}$ have a columnar and platelet morphology.

### Example 2b: Formation of the crystalline form of the ATBS sodium salt (ATBS.Na $A_{Na}$2b)

The crystals of ATBS.Na $\mathbf{A_{Na}2b}$ are prepared according to the procedure described in Example 2a except that $SA_2$ is distilled under 700 mbar.
Optical microscope observations (Figure 14) show that the crystals $\mathbf{A_{Na}2b}$ obtained in these conditions are identical to the crystals of ATBS.Na $\mathbf{A_{Na}2a}$ prepared in example 2a.

### Example 2c: Formation of the crystalline form of the ATBS sodium salt (ATBS.Na $A_{Na}$2c)

The crystals of ATBS.Na $\mathbf{A_{Na}2c}$ are prepared according to the procedure described in Example 2a except that the cooling time is reduced to 3h45.
Optical microscope observations (Figure 15) show that show that the crystals obtained in these conditions are identical to the crystals of ATBS.Na $\mathbf{A_{Na}2a}$.

### Comparative example 2a: Preparation of crystals of ATBS.Na under atmospheric pressure (1 bar) (CE- $A_{Na}$2a) (not obtained)

The reaction is carried out according to the procedure described in Example 2a except that $SA_2$ is distilled under atmospheric pressure.
At the end of the cooling step, the aqueous solution $SA_2$ does not allow the formation of a suspension S1, and no filtration or centrifuging operation can be carried out to isolate crystals of ATBS sodium salt.

### Comparative example 2b: Preparation of crystals of ATBS sodium salt (CE- $A_{Na}$2b) (not obtained)

The reaction was carried out according to the conditions described in example 27 of patent application US6331647.
124 g of sodium hydroxide and 0.13 g of hydroquinone monomethyl ether are added to a stirred, double-jacketed 5 000 ml reactor with 400 g of water. The medium is stirred until all the sodium hydroxide is dissolved.
632 g of ATBS $\mathbf{A_H}$ are added to the previous mixture. The mixture is stirred for 30 min, at 10°C, to form an aqueous solution of sodium salt of 2-acrylamido-2-methylpropanesulfonate.
The aqueous solution obtained is filtered in a 3 000 ml reactor equipped for distillation and containing an air purge

tube. The content is heated and stirred while air is blown belon the surface at 0.5 cubic feet per h. The content is heated to 50°C while under a vacuum of 933 mbar (~700 millimeters of mercury). As the water is removed, a yellowish honeylike product forms. The product is then transfer to a Robatel vertical centrifuge, but no solid was recovered.

No optical microscope observation was possible as no solid was obtained (figure 16).

### Comparative example 2c: Preparation of crystals of ATBS sodium salt (CE- $A_{Na}$2c) (not obtained)

The reaction was carried out according to the conditions described in example 3 of patent application WO2013079507.

100 g of an ATBS.Na solution (16.77% by weight) is obtained according to example 1 of WO2013079507.

50 g of solvent (mixture of acrylonitrile and methanol) are removed from the ATBS.Na solution at room temperature under reduced pressure (less than 700 mbar) while introducing air into the ATBS.Na solution. A solid of ATBS.Na **CE- $A_{Na}$2c** is formed and is filtered and washed with acrylonitrile/methanol and then dried at 50°C overnight.

Optical microscope observation (Figure 17) shows that the dried solid of ATBS.Na **CE-$A_{Na}$2c** does not correspond to the crystals of ATBS.Na according to the invention.

### Comparative example 2d: Preparation of ATBS.Na CE-$A_{Na}$2d (not according to the invention)

The reaction is carried out according to the procedure described in Example 2a except that $SA_2$ is distilled under 720 mbar.

A solid of composition C1 is obtained, containing 80% by weight of crystals of the ATBS.Na **CE- $A_{Na}$2d**.

Optical microscope observation (Figure 18) shows that the dried solid of ATBS.Na **CE-$A_{Na}$2c** does not correspond to the crystals of ATBS.Na according to the invention.

### Comparative example 2e: Preparation of ATBS.Na CE-$A_{Na}$2e (not according to the invention)

The reaction is carried out according to the procedure described in Example 2a except that the cooling time is 3h20.

A solid of composition $C_1$ is obtained, containing 80% by weight of crystals of the ATBS.Na **CE-$A_{Na}$2e.**

Optical microscope observation (Figure 19) shows that the dried solid of ATBS.Na CE-**$A_{Na}$2e** does not correspond to the crystals of ATBS.Na according to the invention.

### Example 3: NMR analysis of the products of ATBS $A_H$ and ATBS.Na $A_{Na}$2a from examples 1 and 2a

ATBS **$A_H$** and ATBS.Na **$A_{Na}$2a** are analysed by proton nuclear magnetic resonance (NMR).

The samples are dissolved in $D_2O$. The NMR machine is a Bruker model with a frequency of 400 MHz and is fitted with a 5 mm BBO BB-$^1$H.

The two proton spectra (Figures 1 and 2) are similar and the peak assignments are consistent with the molecular structure of ATBS or the sodium salt.

### Example 4: Analysis by X-ray diffraction of ATBS $A_H$ and ATBS.Na $A_{Na}$2a products from examples 1 and 2a

ATBS **$A_H$** and crystals of ATBS.Na **$A_{Na}$2a** are ground beforehand to form powders to be analysed by X-ray diffraction over an angular range of 10 to 90°. The equipment used is a Rigaku MiniFlex II diffractometer equipped with a copper source.

Crystals of ATBS.Na **$A_{Na}$2a** (Figure 4) present an X-ray diffraction pattern with the following characteristic peaks: 11.7°; 12.2°; 13.2°; 13.5°; 15.6°; 16.8°; 17.8°; 18.5°; 19.1°; 20.6°; 21.4°; 23.3°; 25.1°; 25.8°; 26.9°; 29.1°; 29.5°; 31.0°; 33.0°; 33.6°; 34.4°; 35.2°; 35.9°; 37.1°; 38.4°; 39.6°; 41.1°; 42.9°; 45.1°; 46.0°; 47.2°; 47.6° 2-theta angles (+/- 0.1°).

The X-ray diffraction pattern of the ATBS **$A_H$** (Figure 3) does not have the same peaks.

### Example 5: Fourier-transform infrared measurement of ATBS $A_H$ and ATBS.Na $A_{Na}$2a

The equipment used for the Fourier transform infrared measurement is the Perkin Elmer Spectrum 100 fitted with a single reflection ATR polarization accessory, with an accuracy of 8 $cm^{-1}$.

ATBS **$A_H$** and crystals of **ATBS.Na $A_{Na}$2a** are sieved to 100 $\mu$m. The particles remaining on the sieve are dried and placed in an oven at 60°C for at least 4 h.

A few hundred milligrams of solid are placed on the diamond of the ATR accessory and pressure is applied manually using the accessory.

The following bands (figure 6) are characteristic of the crystalline form of the ATBS.Na **$A_{Na}$2a**: 3576cm$^{-1}$, 3485 cm$^{-1}$, 3310 cm$^{-1}$, 3079 cm$^{-1}$, 2975 cm$^{-1}$, 1658 cm$^{-1}$, 1629 cm$^{-1}$, 1543 cm$^{-1}$, 1403 cm$^{-1}$, 1321 cm$^{-1}$, 1301 cm$^{-1}$, 1205 cm$^{-1}$, 1187 cm$^{-1}$, 1163 cm$^{-1}$, 1046 cm$^{-1}$, 980 cm$^{-1}$, 629 cm$^{-1}$.
The infrared spectrum of ATBS **$A_H$** (figure 5) does not have the same peaks.

**Example 6: Differential Scanning Calorimetry (DSC) of ATBS $A_H$ and ATBS.Na $A_{Na}$2a products from Examples 1 and 2a**

The equipment used is a Mettler DSC 3.
ATBS **$A_H$** and crystals of ATBS.Na **$A_{Na}$2a** are analysed with a heating ramp of 10°C/min under a flow of nitrogen. The initial temperature is 30°C, and the product is heated to 350°C.
The thermogram of ATBS **$A_H$** (figure 7) shows a thermal effect at a temperature of 195.15°C, which is generally considered to be the melting/degradation point of ATBS, followed by two exothermic degradation phenomena at 212.8°C and 288.4°C.
The thermogram of the crystals of ATBS.Na **$A_{Na}$2a** (figure 8) shows 4 thermal phenomena at 49.8°C; 144.8°C; 169.8°C; and 254.3°C.

**Example 7: Preparation of a polymer P1-$A_{Na}$2a of acrylamide (AM)/ATBS (75/25 mol%)**

1035 g of deionised water, 520.5 g of AM (50% by weight solution in water), 16.2 g of urea and 285 g of ATBS.Na **$A_{Na}$2a** are added to a 2000 mL beaker.
The solution thus obtained is cooled to between 5 and 10°C and transferred to an adiabatic polymerisation reactor, where nitrogen is bubbled through for 30 min to eliminate any trace of dissolved oxygen.
The following are then added to the reactor:

- 0.45 g of 2,2'-azobisisobutyronitrile,
- 1.5 ml of a 2.5 g/l solution of 2,2'-azobis[2-(2-imidazolin-2-yl)propane] dihydrochloride,
- 10 ml of a 1 g/l solution of sodium hypophosphite,
- 1.5 ml of a 1 g/l solution of ter-butyl hydroperoxide,
- 1.5 ml of a 1 g/l solution of ammonium sulphate and iron(II) hexahydrate (Mohr's salt).

After a few min, the nitrogen inlet is shut off and the reactor is closed. The polymerisation reaction continues for 2 to 5 h until a temperature peak is reached. The rubbery gel obtained is chopped and dried o obtain a rough powder which is then ground and sieved to obtain the polymer in powder form.
The gel is then dried and ground to obtain polymer **P1-$A_{Na}$2a** in powder form.
Polymers **P2-$A_{Na}$2a**, **P3-$A_{Na}$2a** and **P4-$A_{Na}$2a** are obtained using the method for obtaining polymer **P1-$A_{Na}$2a** by varying the amount of sodium hypophosphite.

**P2-$A_{Na}$2a**: 1.5 ml of a 3 g/l solution of sodium hypophosphite
**P3-$A_{Na}$2a**: 1 ml of a 3 g/l solution of sodium hypophosphite
**P4-$A_{Na}$2a**: 1.5 ml of a 1 g/l solution of sodium hypophosphite

**Example 8: Preparation of comparative polymers P'1 to P'3 of AM/ATBS polymers (75/25 mol%)**

The polymers **P'1-$A_H$, P'2-Au** and **P'3-$A_H$** are obtained according to the protocol described in example 7 for P1 to P3 using 257 g of ATBS **$A_H$** and 99 g of sodium hydroxide at 50% concentration by weight in water.
Polymers **P'1-CE$A_{Na}$2c, P'2-CE$A_{Na}$2c, P'3-CE$A_{Na}$2c** are obtained according to the protocol described in example 7 using ATBS **CE-ANa2c.**
Polymers **P'1-CE$A_{Na}$2d, P'2-CE$A_{Na}$2d, P'3-CE$A_{Na}$2d** are obtained according to the protocol described in example 7 using ATBS **CE-ANa2d.**
Polymers **P'1-CE$A_{Na}$2e, P'2-CE$A_{Na}$2e, P'3-CE$A_{Na}$2e** are obtained according to the protocol described in example 7 using ATBS **CE-ANa2e.**

**Example 9: Measurement of the filter ratio of polymer solutions**

Filtration tests were carried out on polymers prepared in examples 7 and 8.
The results are presented in table 1.
The polymer solutions were obtained at an active concentration of 1,000 ppm in a brine containing water, 30,000

ppm NaCl and 3,000 ppm $CaCl_2$,$2H_2O$ (ppm by weight). The filtration ratio (FR) was measured on filters with a pore size of 1.2 μm representative of low-permeability deposits.

Table 1: Polymers tested for filterability ratio

| Polymer | ATBS sodium salt used | Molecular weight (in millions Da) | Filtration ratio |
|---|---|---|---|
| **P1-$A_{Na}$2a** | Crystals of ATBS.Na **$A_{Na}$2a** | 6.5 | 1.06 |
| **P2-$A_{Na}$2a** | Crystals of ATBS.Na **$A_{Na}$2a** | 9 | 1.04 |
| **P3-$A_{Na}$2a** | Crystals of ATBS.Na **$A_{Na}$2a** | 11 | 1.06 |
| **P4-$A_{Na}$2a** | Crystals of ATBS.Na **$A_{Na}$2a** | 13 | 1.19 |
| **P'1-$A_H$** | ATBS **$A_H$** | 6.5 | 1.13 |
| **P'2-$A_H$** | ATBS **$A_H$** | 9 | 1.17 |
| **P'3-$A_H$** | ATBS **$A_H$** | 11.5 | 1.42 |
| **P'1-CE$A_{Na}$2c** | Crystals of ATBS.Na **CE-$A_{Na}$2c** | 6.6 | 1.11 |
| **P'2-CE$A_{Na}$2c** | Crystals of ATBS.Na **CE-$A_{Na}$2c** | 8.9 | 1.18 |
| **P'3-CE$A_{Na}$2c** | Crystals of ATBS.Na **CE-$A_{Na}$2c** | 11.5 | 1.40 |
| **P'1-CE$A_{Na}$2d** | Crystals of ATBS.Na **CE-$A_{Na}$2d** | 6.5 | 1.13 |
| **P'2-CE$A_{Na}$2d** | Crystals of ATBS.Na **CE-$A_{Na}$2d** | 9.1 | 1.19 |
| **P'3-CE$A_{Na}$2d** | Crystals of ATBS.Na **CE-$A_{Na}$2d** | 11.3 | 1.41 |
| **P'1-CE$A_{Na}$2e** | Crystals of ATBS.Na **CE-$A_{Na}$2e** | 6.5 | 1.12 |
| **P'2-CE$A_{Na}$2e** | Crystals of ATBS.Na **CE-$A_{Na}$2e** | 8.9 | 1.16 |
| **P'3-CE$A_{Na}$2e** | Crystals of ATBS.Na **CE-$A_{Na}$2e** | 11.4 | 1.44 |

Table 1 shows that, at equivalent molecular weights, polymers obtained from the crystalline form of the ATBS.Na (**P1** to **P3-$A_{Na}$2a**) always have a lower FR than polymers obtained from the non-crystalline form of the ATBS.Na (**P'1** to **P'3-$A_H$**) or from a crystalline form of the ATBS.Na not according to the invention. This difference becomes increasingly significant as the molecular weight of the polymer increases. The polymer obtained from the crystalline form of the ATBS.Na with a molecular weight of 13 million Da (**P4-$A_{Na}$2a**) even has a lower FR than the polymer obtained from the non-crystalline form of the ATBS.Na with a lower molecular weight (11.5 million Da, **P'3-$A_H$**), or from different crystalline form (**P'3-CE$A_{Na}$2c-e**).

**Example 10: Measurement of the resistance to chemical degradation of polymer solutions of equivalent molecular weights**

Tests of the resistance of the polymer **P3** and comparative polymers **P'3**, to chemical degradation were carried out under aerobic conditions in the presence of different concentrations of iron(II) (2, 5, 10 and 20 ppm) in a brine composed of water, 37,000 ppm of NaCl, 5,000 ppm of $Na_2SO_4$ and 200 ppm of $NaHCO_3$ (ppm by weight). The results obtained after 24 h of contact between the polymer solution and the contaminant are shown in Figure 9.

The results are presented in table 2.

Table 2: Measurement of the resistance to chemical degradation of polymer P3-$A_{Na}$2a and comparative polymers P'3-$A_H$ and P'3-CE$A_{Na}$2c-2e.

| Polymer | Iron (II) concentration (ppm) | viscosity loss (%) |
|---|---|---|
| **P3-$A_{Na}$2a** | 2 | 3.5 |
| **P'3-$A_H$** | 2 | 6 |
| **P'3-CE$A_{Na}$2c** | 2 | 6.5 |
| **P'3-CE$A_{Na}$2d** | 2 | 6 |
| **P'3-CE$A_{Na}$2e** | 2 | 7 |

(continued)

| Polymer | Iron (II) concentration (ppm) | viscosity loss (%) |
|---|---|---|
| **P3-$A_{Na}$2a** | 5 | 4.5 |
| **P'3-$A_H$** | 5 | 9 |
| **P'3-$CEA_{Na}$2c** | 5 | 8.8 |
| **P'3-$CEA_{Na}$2d** | 5 | 9.3 |
| **P'3-$CEA_{Na}$2e** | 5 | 9.9 |
| **P3-$A_{Na}$2a** | 10 | 11 |
| **P'3-$A_H$** | 10 | 14 |
| **P'3-$CEA_{Na}$2c** | 10 | 14 |
| **P'3-$CEA_{Na}$2d** | 10 | 14.8 |
| **P'3-$CEA_{Na}$2e** | 10 | 14.6 |
| **P3-$A_{Na}$2a** | 20 | 24 |
| **P'3-$A_H$** | 20 | 34 |
| **P'3-$CEA_{Na}$2c** | 20 | 35 |
| **P'3-$CEA_{Na}$2d** | 20 | 35.5 |
| **P'3-$CEA_{Na}$2e** | 20 | 34.8 |

It can be seen that, for each iron(II) concentration, polymer **P3-$A_{Na}$2a** undergoes a smaller loss of viscosity than the equivalent comparative polymers **P'3-$A_H$, P'3-$CEA_{Na}$2c, P'3-$CEA_{Na}$2d, P'3-$CEA_{Na}$2e.**

**Example 11: Measurement of the resistance to thermal degradation of polymer solutions of equivalent molecular weights**

Thermal degradation resistance tests on **P3-$A_{Na}$2a** and **P'3** comparative polymers were carried out under anaerobic conditions at an active concentration of 2,000 ppm in a brine composed of 30,000 ppm NaCl and 3,000 ppm $CaCl_2$,$2H_2O$ (ppm by weight). The polymer solutions were aged for 6 months at 90°C. The results obtained are shown in Figure 10 in terms of loss of viscosity.

The results are presented in table 3.

Table 3: Measurement of the resistance to thermal degradation of polymer **P3-$A_{Na}$2a** and **P'3-$A_H$, P'3-$CEA_{Na}$2c-e**

| Polymer | viscosity loss (%) |
|---|---|
| **P3-$A_{Na}$2a** | 8 |
| **P'3-$A_H$** | 18.6 |
| **P'3-$CEA_{Na}$2c** | 18 |
| **P'3-$CEA_{Na}$2d** | 18.4 |
| **P'3-$CEA_{Na}$2e** | 19 |

We can see that **P3-$A_{Na}$2a** loses less viscosity than the equivalent comparative polymers **P'3-$A_H$** and **P'3-$CEA_{Na}$2c-e.**

**Example 12: Preparation of homopolymers P5 to P7 from the crystalline form of the ATBS.Na according to the invention**

Polymer **P5-$A_{Na}$2a** is prepared according to the protocol described in Example 7 for the preparation of polymers **P1** to **P3-$A_{Na}$2a** with the quantities of monomer and excipients being adjusted to reach the desired molar composition of 100 mol% of ATBS (using 30 ml of a 1g/L solution of sodium hypophosphite)

Polymers **P6-$A_{Na}$2a** and **P7-$A_{Na}$2a** are prepared according to the same protocol than for polymer **P5-$A_{Na}$2a**

using varying the amount of sodium hypophosphite. (using 1.5 ml of a 1g/L solution of sodium hypophosphite)

**Example 13: Preparation of comparative homopolymers P'5 to P'7 of ATBS (not according to the invention)**

Comparative polymers **P'5-$A_H$, P'6-$A_H$** and **P'7-$A_H$** are prepared according to the protocol described in Example 12 using 452 g of ATBS **$A_H$** and 175 g of sodium hydroxide at 50% concentration by weight in water.

Polymers **P'5-$CEA_{Na}$2c, P'6-$CEA_{Na}$2c** are prepared using ATBS.Na **CE-$A_{Na}$2c** . Polymers **P'5-$CEA_{Na}$2d, P'6-$CEA_{Na}$2d** are prepared using ATBS.Na **CE-$A_{Na}$2d.** Polymers **P'5-$CEA_{Na}$2e, P'6-$CEA_{Na}$2e** are prepared using ATBS.Na **CE-$A_{Na}$2e**.

**Example 14: Measurement of the filter ratio of polymer solutions of polymers P5 to P7 and comparative polymers P'5 to P'7**

Filtration tests were carried out on polymers prepared in Examples 12 and 13. Polymer **P7-$A_{Na}$2a** of 15 million Da molecular weight grade is not accessible when using the non-crystalline form of the ATBS.Na according to the invention Theresults are presented in table 4.

The polymer solutions were obtained at an active concentration of 1,000 ppm in a brine containing water, 30,000 ppm NaCl and 3,000 ppm $CaCl_2$,$2H_2O$ (ppm by weight). The filtration ratio (FR) was measured on filters with a pore size of 1.2 $\mu$m representative of low-permeability deposits.

Table 4: Polymers tested for filterability ratio

| Polymer | ATBS sodium salt used | Molecular weight (in millions Da) | Filtration ratio |
|---|---|---|---|
| **P5-$A_{Na}$2a** | Crystals of ATBS.Na **$A_{Na}$2a** | 3.1 | 1.06 |
| **P6-$A_{Na}$2a** | Crystals of ATBS.Na **$A_{Na}$2a** | 5.3 | 1.04 |
| **P7-$A_{Na}$2a** | Crystals of ATBS.Na **$A_{Na}$2a** | 15 | 1.27 |
| **P'5-$A_H$** | ATBS **$A_H$** | 3.1 | 1.18 |
| **P'6-$A_H$** | ATBS **$A_H$** | 5.3 | 1.58 |
| **P'5-$CEA_{Na}$2c** | Crystals of ATBS.Na **CE-$A_{Na}$2c** | 3.1 | 1.19 |
| **P'6-$CEA_{Na}$2c** | Crystals of ATBS.Na **CE-$A_{Na}$2c** | 5.3 | 1.55 |
| **P'5-$CEA_{Na}$2d** | Crystals of ATBS.Na **CE-$A_N$a2d** | 3.1 | 1.18 |
| **P'6-$CEA_{Na}$2d** | Crystals of ATBS.Na **CE-$A_N$a2d** | 5.3 | 1.57 |
| **P'5-$CEA_{Na}$2e** | Crystals of ATBS.Na **CE-$A_{Na}$2e** | 3.1 | 1.20 |
| **P'6-$CEA_{Na}$2e** | Crystals of ATBS.Na **CE-$A_{Na}$2e** | 5.3 | 1.55 |

Table 4 shows that, at equivalent molecular weights, polymers obtained from the crystalline form of the ATBS.Na according to the invention always have a lower FR than polymers obtained from the non-crystalline form of the ATBS.Na not according to the invention. This difference becomes increasingly significant as the molecular weight of the polymer increases. The polymer obtained from the crystalline form of the ATBS.Na with a molecular weight of 15 million Da **(P7)** even has a lower FR than the polymer obtained from the non-crystalline form of the ATBS.Na with a lower molecular weight (5.3 million Da, **P'6-$A_H$),** or from a different crystalline form **(P'6-$CEA_{Na}$2c-e).**

**Example 15: Measurement of the resistance to chemical degradation of polymer solutions of equivalent molecular weights**

Tests of the resistance of polymer **P6-$A_{Na}$2a** and comparative polymers **P'6-$A_H$** and **P'6-$CEA_{Na}$2c-e** to chemical degradation were carried out under aerobic conditions in the presence of different concentrations of iron (II) (2, 5, 10 and 20 ppm) in a brine composed of water, 37,000 ppm of NaCl, 5,000 ppm of $Na_2SO_4$ and 200 ppm of $NaHCO_3$ (ppm by weight). The results obtained after 24 h of contact between the polymer solution and the contaminant are shown in Figure 11.

The results are presented in table 5.

Table 5: Measurement of the resistance to chemical degradation of polymer **P6-$A_{Na}$2a** according to the invention and comparative polymers **P'6.**

| Polymer | Iron(II) concentration (ppm) | viscosity loss (%) |
|---|---|---|
| **P6-$A_{Na}$2a** | 2 | 9 |
| **P'6-$A_H$** | 2 | 10 |
| **P'6-$CEA_{Na}$2c** | 2 | 11 |
| **P'6-$CEA_{Na}$2d** | 2 | 11 |
| **P'6-$CEA_{Na}$2e** | 2 | 11.5 |
| **P6-$A_{Na}$2a** | 5 | 15 |
| **P'6-$A_H$** | 5 | 21 |
| **P'6-$CEA_{Na}$2c** | 5 | 23 |
| **P'6-$CEA_{Na}$2d** | 5 | 22 |
| **P'6-$CEA_{Na}$2e** | 5 | 21.5 |
| **P6-$A_{Na}$2a** | 10 | 23 |
| **P'6-$A_H$** | 10 | 36 |
| **P'6-$CEA_{Na}$2c** | 10 | 35.5 |
| **P'6-$CEA_{Na}$2d** | 10 | 36 |
| **P'6-$CEA_{Na}$2e** | 10 | 37 |
| **P6-$A_{Na}$2a** | 20 | 29 |
| **P'6-$A_H$** | 20 | 47 |
| **P'6-$CEA_{Na}$2c** | 20 | 45 |
| **P'6-$CEA_{Na}$2d** | 20 | 44 |
| **P'6-$CEA_{Na}$2e** | 20 | 47 |

It can be seen that, for each iron(II) concentration, the polymer according to the invention undergoes a smaller loss of viscosity than the equivalent comparative polymers **P'6.**

**Example 16: Preparation of a polymer P8-$A_{Na}$2a of AM/ATBS according to the invention (75/25 mol%).**

Polymers **P8-$A_{Na}$2a** is prepared according to the protocol described in Example 7 for the preparation of polymer **P1** with the quantities of monomers and excipients being adjusted to reach the desired molar composition of AM/ATBS (75/25).

Post-hydrolysis of acrylamide: 500.0 g of pre-chopped gel is then mixed with 16.0 g of 50% by weight sodium hydroxide solution in water, and the mixture is heated and maintained at a temperature of 90°C for 90 min.

The gel is then dried and ground to obtain the polymer **P8-$A_{Na}$2a** in powder form.

**Example 17: Preparation of comparative polymer P'8 of AM/ATBS (75/25 mol%).**

The polymer **P'8-$A_H$** is prepared according to the protocol described in Example 16 using 257g of ATBS **$A_H$** and 99.5 g of sodium hydroxide at 50% concentration by weight in water.

Polymer **P'8-$CEA_{Na}$2c** is prepared according to the protocol described in Example 16 using crystals of **CE-ANa2c.**

Polymer **P'8-$CEA_{Na}$2d** is prepared according to the protocol described in Example 16 using crystals of **CE-ANa2d.**

Polymer **P'8-$CEA_{Na}$2e** is prepared according to the protocol described in Example 16 using crystals of **CE-ANa2e.**

**Example 18: Measurement of the filter ratio of polymer solutions**

Filtration tests were carried out on polymers obtained in Examples 16 and 17. The results are presented in table 6.

Polymer solutions were obtained at an active concentration of 1,000 ppm in a brine containing water, 30,000 ppm NaCl and 3,000 ppm $CaCl_2$,$2H_2O$ (ppm by weight). The filtration quotient (FR) was measured on filters with a pore size of 3 μm representative of low-permeability deposits.

Table 6: Filterability ratio of the polymer **P8** according to the invention and comparative polymers **P'8**

| Polymer | ATBS sodium salt used | Molecular weight (in millions Da) | Filtration ratio |
|---|---|---|---|
| **P8-$A_{Na}$2a** | Crystals of ATBS.Na **$A_{Na}$2a** | 26 | 1.06 |
| **P'8-$A_H$** | ATBS **$A_H$** | 22 | 1.15 |
| **P'8-CE$A_{Na}$2c** | Crystals of ATBS.Na **CE-$A_{Na}$2c** | 21 | 1.17 |
| **P'8-CE$A_{Na}$2d** | Crystals of ATBS.Na **CE-$A_{Na}$2d** | 21.5 | 1.18 |
| **P'8-CE$A_{Na}$2e** | Crystals of ATBS.Na **CE-$A_{Na}$2e** | 21 | 1.17 |

Table 6 shows that, despite a higher molecular weight, the polymer obtained from the crystalline form of the ATBS.Na (**P8-$A_{Na}$2a**) has an FR equivalent to that of the polymer obtained from the non-crystalline form of ATBS (**P8-$A_H$**), or from a different crystalline form (**P'8-CE$A_{Na}$2c-e**).

**Example 19: Preparation of the copolymers P9 and P'9 of AM/acrylic acid (AA)/ATBS (75/10/15 mol%)**

The experimental protocol of examples 7 and 8 are reproduced except that the quantities of the different monomers are adjusted to reach the desired molar composition of AM/AA acid/ATBS and give polymers **P9-$A_{Na}$2a**, **P'9-$A_H$** and **P'9-CE$A_{Na}$2c to 2e.**

**Example 20: Preparation of polymers P10/P'10 of AM/quaternized dimethylaminoethyl acrylate.$CH_3Cl$ (DMEA.MeCl)/ATBS (60/5/35 mol%)**

The experimental protocol of examples 7 and 8 are reproduced except that the quantities of the different monomers are adjusted to reach the desired molar composition of AM/DMEA.MeCl/ATBS and give the polymers **P10-$A_{Na}$2a, P'10-$A_H$** and **P'10-CE$A_{Na}$2c to 2e**.

**Example 21: Preparation of polymers P11/P'11 of AM/diallyl dimethyl ammonium chloride (DADMAC)/ATBS (75/5/20 mol%)**

The experimental protocol of examples 7 and 8 are reproduced except that the quantities of the different monomers are adjusted to reach the desired molar composition of AM/DADMAC/ATBS and give the polymers **P11-$A_{Na}$2a, P'11-$A_H$** and **P'11-CE$A_{Na}$2c to 2e**

**Example 22: Measurement of the resistance to chemical degradation of polymer solutions of equivalent molecular weights**

Tests of the resistance of polymers from examples 19-21 to chemical degradation were carried out under aerobic conditions in the presence of different concentrations of iron(II) (2, 5, 10 and 20 ppm) in a brine composed of water, 37,000 ppm of NaCl, 5,000 ppm of $Na_2SO_4$ and 200 ppm of $NaHCO_3$ (ppm by weight). All polymers have the same chemical composition. The results are presented in table 7.

Table 7: Measurement of the resistance to chemical degradation of polymer from examples 16-18

| Polymer | Iron (II) concentration (ppm) | viscosity loss (%) |
|---|---|---|
| **P9-$A_{Na}$2a** | 2 | 4.5 |
| **P'9-$A_H$** | 2 | 7.7 |
| **P'9-CE$A_{Na}$2c** | 2 | 8 |
| **P'9-CE$A_{Na}$2d** | 2 | 8.1 |

(continued)

| Polymer | Iron (II) concentration (ppm) | viscosity loss (%) |
|---|---|---|
| P'9-$CEA_{Na}$2e | 2 | 7.7 |
| P9-$A_{Na}$2a | 5 | 5.4 |
| P'9-$A_H$ | 5 | 15.5 |
| P'9-$CEA_{Na}$2c | 5 | 14.9 |
| P'9-$CEA_{Na}$2d | 5 | 15.3 |
| P'9-$CEA_{Na}$2e | 5 | 15 |
| P9-$A_{Na}$2a | 10 | 12.3 |
| P'9-$A_H$ | 10 | 29.6 |
| P'9-$CEA_{Na}$2c | 10 | 30.5 |
| P'9-$CEA_{Na}$2d | 10 | 31 |
| P'9-$CEA_{Na}$2e | 10 | 30.7 |
| P9-$A_{Na}$2a | 20 | 27 |
| P'9-$A_H$ | 20 | 40.4 |
| P'9-$CEA_{Na}$2c | 20 | 41 |
| P'9-$CEA_{Na}$2d | 20 | 40.8 |
| P'9-$CEA_{Na}$2e | 20 | 40.6 |
| P10-$A_{Na}$2a | 2 | 5.5 |
| P'10-$A_H$ | 2 | 9 |
| P'10-$CEA_{Na}$2c | 2 | 9.2 |
| P'10-$CEA_{Na}$2d | 2 | 9.3 |
| P'10-$CEA_{Na}$2e | 2 | 9.4 |
| P10-$A_{Na}$2a | 5 | 9.9 |
| P'10-$A_H$ | 5 | 17 |
| P'10-$CEA_{Na}$2c | 5 | 16.7 |
| P'10-$CEA_{Na}$2d | 5 | 17.6 |
| P'10-$CEA_{Na}$2e | 5 | 17.2 |
| P10-$A_{Na}$2a | 10 | 14.9 |
| P'10-$A_H$ | 10 | 33 |
| P'10-$CEA_{Na}$2c | 10 | 32 |
| P'10-$CEA_{Na}$2d | 10 | 33.8 |
| P'10-$CEA_{Na}$2e | 10 | 32.4 |
| P10-$A_{Na}$2a | 20 | 31 |
| P'10-$A_H$ | 20 | 44.6 |
| P'10-$CEA_{Na}$2c | 20 | 44.1 |
| P'10-$CEA_{Na}$2d | 20 | 43.8 |
| P'10-$CEA_{Na}$2e | 20 | 45.1 |
| P11-$A_{Na}$2a | 2 | 3.9 |
| P'11-$A_H$ | 2 | 6.9 |
| P'11-$CEA_{Na}$2e | 2 | 6.8 |

(continued)

| Polymer | Iron (II) concentration (ppm) | viscosity loss (%) |
|---|---|---|
| **P'11-CEA$_{Na}$2d** | 2 | 6.6 |
| **P'11-CEA$_{Na}$2e** | 2 | 7 |
| **P11-A$_{Na}$2a** | 5 | 4.7 |
| **P'11-A$_H$** | 5 | 13.3 |
| **P'11-CEA$_{Na}$2e** | 5 | 13.8 |
| **P'11-CEA$_{Na}$2d** | 5 | 13 |
| **P'11-CEA$_{Na}$2e** | 5 | 13.4 |
| **P11-A$_{Na}$2a** | 10 | 11.1 |
| **P'11-A$_H$** | 10 | 27.4 |
| **P'11-CEAn$_{Na}$2c** | 10 | 27.3 |
| **P'11-CEA$_{Na}$2d** | 10 | 27.8 |
| **P'11-CEA$_{Na}$2e** | 10 | 28.1 |
| **P11-CEA$_{Na}$2a** | 20 | 25.1 |
| **P'11-A$_H$** | 20 | 37.1 |
| **P'11-CEA$_{Na}$2e** | 20 | 37.8 |
| **P'11-CEA$_{Na}$2d** | 20 | 36.8 |
| **P'11-CEA$_{Na}$2e** | 20 | 37 |

It can be seen that, for each iron(II) concentration, polymers **P9** to **P11** according to the invention undergoes a smaller loss of viscosity than their equivalent comparative polymers not prepared with the crystalline form of ATBS.Na according to the invention.

**Example 23: Measurement of the filter ratio of solutions of polymers of Examples 19 to 21**

Filtration tests were carried out on polymers prepared in examples 19-21. The results are presented in table 8.

Polymer solutions were obtained at an active concentration of 1,000 ppm in a brine containing water, 30,000 ppm NaCl and 3,000 ppm $CaCl_2,2H_2O$ (ppm by weight). The filtration quotient (FR) was measured on filters with a pore size of 3 μm representative of low-permeability deposits.

Table 8: Filterability ratio of polymers **P9** to **P11** according to the invention and comparative polymers **P'9** to **P'11**

| Polymer | ATBS sodium salt used | Molecular weight (in millions Da) | Filtration ratio |
|---|---|---|---|
| **P9-A$_{Na}$2a** | Crystals of ATBS.Na **A$_{Na}$2a** | 8.7 | 1.08 |
| **P'9-A$_H$** | ATBS **A$_H$** | 8.6 | 1.19 |
| **P'9-CEA$_{Na}$2c** | Crystals of ATBS.Na **CE-A$_{Na}$2c** | 8.5 | 1.21 |
| **P'9-CEA$_{Na}$2d** | Crystals of ATBS.Na **CE-A$_{Na}$2d** | 8.7 | 1.18 |
| **P'9-CEA$_{Na}$2e** | Crystals of ATBS.Na **CE-A$_{Na}$2e** | 8.9 | 1.19 |
| **P10-A$_{Na}$2a** | Crystals of ATBS.Na **A$_{Na}$2a** | 8.5 | 1.09 |
| **P'10-A$_H$** | ATBS **A$_H$** | 8.4 | 1.21 |
| **P'10-CEA$_{Na}$2c** | Crystals of ATBS.Na **CE-A$_{Na}$2c** | 8.5 | 1.24 |
| **P'10-CEA$_{Na}$2d** | Crystals of ATBS.Na **CE-A$_{Na}$2d** | 8.4 | 1.22 |
| **P'10-CEA$_{Na}$2e** | Crystals of ATBS.Na **CE-A$_{Na}$2e** | 8.3 | 1.21 |
| **P11-A$_{Na}$2a** | Crystals of ATBS.Na **CE-A$_{Na}$2e** | 7.9 | 1.08 |
| **P'11-A$_H$** | ATBS **A$_H$** | 7.9 | 1.24 |

(continued)

| Polymer | ATBS sodium salt used | Molecular weight (in millions Da) | Filtration ratio |
|---|---|---|---|
| **P'11-CEA$_{Na}$2c** | Crystals of ATBS.Na **CE-A$_{Na}$2c** | 8 | 1.24 |
| **P'11-CEA$_{Na}$2d** | Crystals of ATBS.Na **CE-A$_{Na}$2d** | 7.6 | 1.25 |
| **P'11-CEA$_{Na}$2e** | Crystals of ATBS.Na **CE-A$_{Na}$2e** | 7.7 | 1.23 |

Table 8 shows that, despite a higher molecular weight, the polymer obtained from the crystalline form of the ATBS.Na (**P9** to **P11**) has an FR equivalent to that of the polymer obtained from the non-crystalline form of ATBS or a different crystalline form of ATBS.Na.

## Claims

**1.** A method for enhanced hydrocarbon recovery comprising the following steps:

a) Preparing an injection fluid comprising at least one water-soluble polymer of 2-acrylamido-2-methylpropane acid ATBS, with water or brine;
the ATBS being, prior to polymerization, a crystalline form of 2-acrylamido-2-methylpropane acid sodium salt ATBS.Na having an X-ray powder diffraction pattern comprising peaks at 11.7°; 12.2°; 13.2°; 13.5°; 15.6°; 16.8°; 17.8°; 18.5°; 19.1°; 20.6°; 21.4°; 23.3°; 25.1°; 25.8°; 26.9°; 29.1°; 29.5°; 31.0°; 33.0°; 33.6°; 34.4°; 35.2°; 35.9°; 37.1°; 38.4°; 39.6°; 41.1°; 42.9°; 45.1°; 46.0°; 47.2°; 47.6° 2-theta angles;
b) Injecting the injection fluid into a subterranean formation;
c) Sweeping the subterranean formation using the injected fluid;
d) Recovering an aqueous hydrocarbon mixture.

**2.** The method according to claim 1, ***characterized* in that** the injection fluid comprises between 10 and 15,000 ppm by weight of water-soluble polymer.

**3.** The method according to one of the preceding claims, ***characterized* in that** at least 50 mol% of ATBS of the water-soluble polymer is, before polymerization, in the crystalline form of the ATBS.Na.

**4.** The method according to one of the preceding claims, ***characterized* in that** the water-soluble polymer comprises between 10 and 100 mol% of anionic monomer(s), this percentage including the monomer corresponding to the crystalline form of ATBS.Na.

**5.** The method according to one of the preceding claims, ***characterized* in that** the water-soluble polymer contains only anionic monomer units and non-ionic monomer units.

**6.** The method according to one of the preceding claims, ***characterized* in that** the water-soluble polymer consist of acrylamide and ATBS, in which 50 mol% is, before polymerization, in the crystalline form of the ATBS.Na.

**7.** The method according to one of the preceding claims, ***characterized* in that** the water-soluble polymer has a filtration quotient of less than 1.5.

**8.** The method according to claim 1, ***characterized* in that** the water-soluble polymer is a homopolymer of ATBS with at least 50 mol% of the ATBS being, before polymerization, in the crystalline form of the ATBS.Na.

**9.** The method according to claim 8, ***characterized* in that** the water-soluble polymer has a filtration ratio of less than 1.5.

**10.** The method according to claim 8 or 9, **characterized in that** the injection fluid comprises between 10 and 15,000 ppm by weight of water-soluble polymer.

## Patentansprüche

**1.** Verfahren zur verstärkten Rückgewinnung von Kohlenwasserstoffen, das folgende Schritte umfasst:

a) Herstellen einer Injektionsflüssigkeit, die mindestens ein wasserlösliches Polymer von 2-Acrylamid-2-methylpropansäure-ATBS enthält, mit Wasser oder Sole;
das ATBS hat vor der Polymerisation eine kristalline Form von 2-Acrylamido-2-methylpropansäure-Natriumsalz-ATBS.Na mit einer Pulverröntgendiffraktometrie, das Maxima bei 11,7°; 12,2°; 13,2°; 13,5°; 15,6°; 16,8°, 17,8°; 18,5°; 19,1°; 20,6; 21,4°; 23,3°; 25,1°; 25,8°; 26,9°; 29,1°; 29,5°; 31,0°; 33,0°; 33,6°; 34,4°; 35,2°; 35,9°; 37,1°; 38,4°; 39,6°; 41,1°; 42,9°; 45,1°; 46,0°; 47,2°; 47,6° 2-Theta-Winkel aufweist,
b) Einspritzen der Injektionsflüssigkeit in eine unterirdische Struktur,
c) Spülen der unterirdischen Struktur mit Hilfe der injizierten Flüssigkeit,
d) Gewinnung eines wässrigen Kohlenwasserstoffgemisches.

**2.** Verfahren nach Anspruch 1, **dadurch *gekennzeichnet,* dass** die Injektionsflüssigkeit zwischen 10 und 15.000 Gewichts-ppm an wasserlöslichem Polymer enthält.

**3.** Verfahren nach einem der vorhergehenden Ansprüche, **dadurch *gekennzeichnet,* dass** mindestens 50 Mol-% des ATBS des wasserlöslichen Polymers vor der Polymerisation in der kristallinen Form des ATBS.Na vorliegen.

**4.** Verfahren nach einem der vorhergehenden Ansprüche, **dadurch *gekennzeichnet,* dass** das wasserlösliche Polymer zwischen 10 und 100 Mol-% anionische(s) Monomer(e) enthält, wobei dieser Prozentsatz das Monomer einschließt, das der kristallinen Form von ATBS.Na entspricht.

**5.** Verfahren nach einem der vorhergehenden Ansprüche, **dadurch *gekennzeichnet,* dass** das wasserlösliche Polymer nur anionische Monomereinheiten und nicht-ionische Monomereinheiten enthält.

**6.** Verfahren nach einem der vorhergehenden Ansprüche, **dadurch *gekennzeichnet,* dass** das wasserlösliche Polymer aus Acylamid und ATBS besteht, wobei 50 Mol-% vor der Polymerisation in der kristallinen Form des ATBS.Na vorliegen.

**7.** Verfahren nach einem der vorhergehenden Ansprüche, **dadurch *gekennzeichnet,* dass** das wasserlösliche Polymer einen Filtrationsquotienten von weniger als 1,5 aufweist.

**8.** Verfahren nach Anspruch 1, **dadurch *gekennzeichnet,* dass** das wasserlösliche Polymer ein Homopolymer von ATBS ist, wobei mindestens 50 Mol-% des ATBS vor der Polymerisation in der kristallinen Form des ATBS.Na vorliegen.

**9.** Verfahren nach Anspruch 8, **dadurch *gekennzeichnet,* dass** das wasserlösliche Polymer eine Filtrationsquote von weniger als 1,5 aufweist.

**10.** Verfahren nach Anspruch 8 oder 9, **dadurch *gekennzeichnet,* dass** die Injektionsflüssigkeit zwischen 10 und 15.000 Gewichts-ppm an wasserlöslichem Polymer enthält.

## Revendications

**1.** Procédé de récupération assistée d'hydrocarbures comprenant les étapes suivantes :

a) Préparation d'un fluide d'injection comprenant au moins un polymère hydrosoluble d'acide 2-acrylamido-2-méthylpropane sulfonique ATBS, avec de l'eau ou avec de la saumure,
l'ATBS étant, avant polymérisation, une forme cristalline du sel de sodium de l'acide 2-acrylamido-2-méthylpropane sulfonique ayant un diagramme de diffraction des rayons X sur poudre comprenant des pics à 11,7° ; 12,2° ; 13,2° ; 13,5° ; 15,6° ; 16,8° ; 17,8° ; 18,5° ; 19,1° ; 20,6° ; 21,4° ; 23,3° ; 25,1° ; 25,8° ; 26,9° ; 29,1° ; 29,5° ; 31,0° ; 33,0° : 33,6° ; 34,4° ; 35,2° ; 35,9° ; 37,1° ; 38,4° ; 39,6° ; 41,1° ; 42,9° ; 45,1° ; 46,0° ; 47,2° ; 47,6° degrés 2-thêta ;
b) Injection du fluide d'injection dans une formation souterraine ;
c) Balayage de la formation souterraine à l'aide du fluide injecté ;
d) Récupération d'un mélange aqueux et hydrocarboné.

**2.** Procédé selon la revendication 1, ***caractérisé* en ce que** le fluide d'injection comprend entre 10 et 15 000 ppm en poids de polymère hydrosoluble.

3. Procédé selon l'une des revendications précédentes, ***caractérisé* en ce qu'**au moins 50 mol% de l'acide 2-acrylamido-2-méthylpropane du polymère hydrosoluble est, avant polymérisation, sous la forme cristalline de l'ATBS Na.

4. Procédé selon l'une des revendications précédentes, ***caractérisé* en ce que** le polymère hydrosoluble comprend entre 10 et 100 mol% de monomère(s) anionique(s), ce pourcentage incluant le monomère correspondant à la forme cristalline de l'ATBS Na.

5. Procédé selon l'une des revendications précédentes, ***caractérisé* en ce que** le polymère hydrosoluble contient uniquement des unités monomériques anioniques et des unités monomériques non-ioniques.

6. Procédé selon l'une des revendications précédentes, ***caractérisé* en ce que** le polymère hydrosoluble est constitué d'acrylamide et ATBS, dont au moins 50 mol% est, avant polymérisation, sous la forme cristalline d'ATBS Na.

7. Procédé selon l'une des revendications précédentes, ***caractérisé* en ce que** le polymère hydrosoluble a un quotient de filtration inférieur à 1,5.

8. Procédé selon la revendication 1, ***caractérisé* en ce que** le polymère hydrosoluble est un homopolymère of ATBS, au moins 50 mol% de l'ATBS étant, avant polymérisation, sous la forme cristalline d'ATBS Na.

9. Procédé selon la revendication 8, ***caractérisé* en ce que** le polymère hydrosoluble a un quotient de filtration inférieur à 1,5.

10. Procédé selon la revendication 8 ou 9, **caractérisé en ce que** le fluide d'injection comprend entre 10 et 15 000 ppm en poids de polymère hydrosoluble.

[Fig. 1]

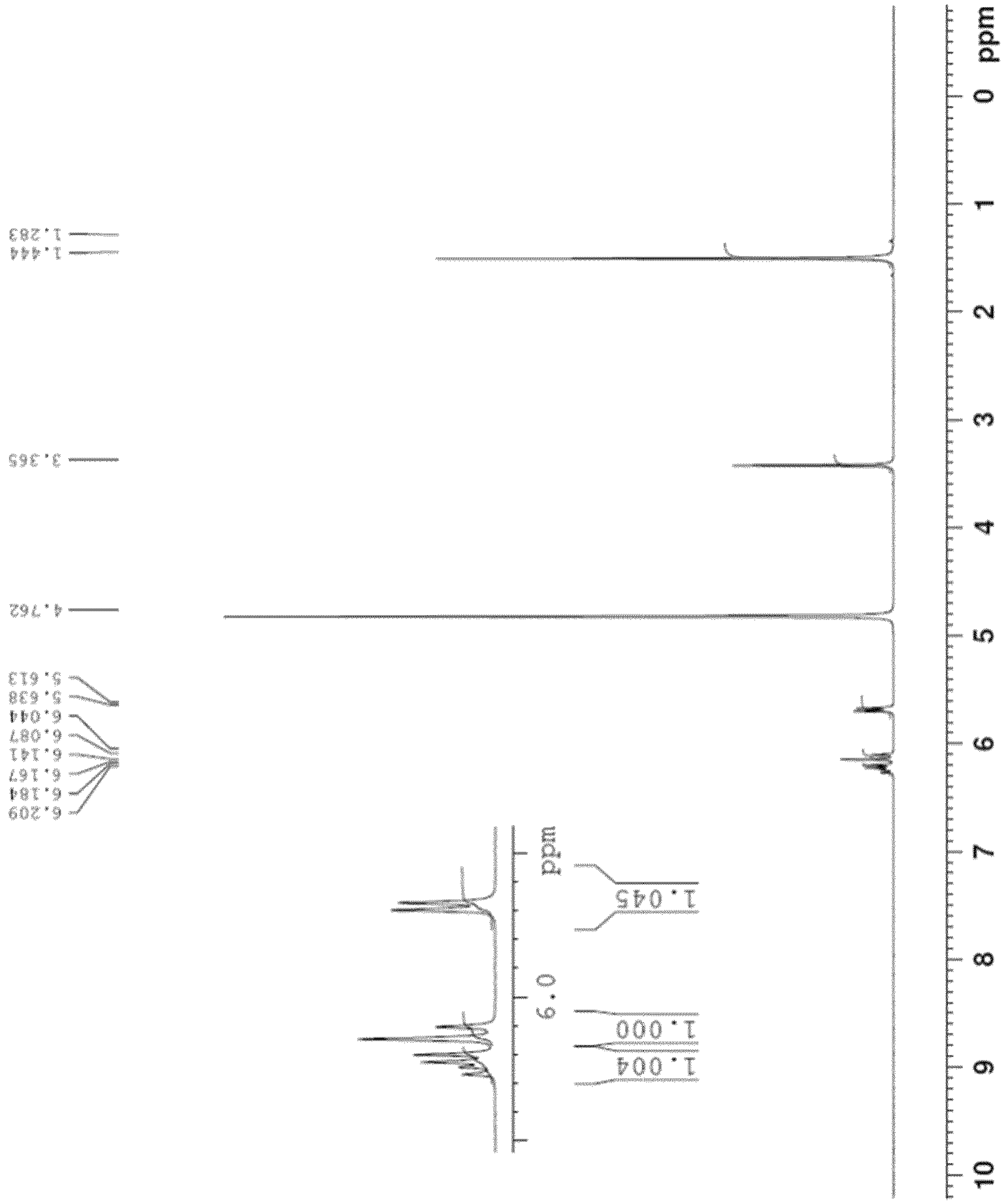
1.283
1.444
3.365
4.762
5.613
5.638
6.044
6.087
6.141
6.167
6.184
6.209
1.045
1.000
1.004
6.0
ppm
0
1
2
3
4
5
6
7
8
9
10
ppm

[Fig. 2]

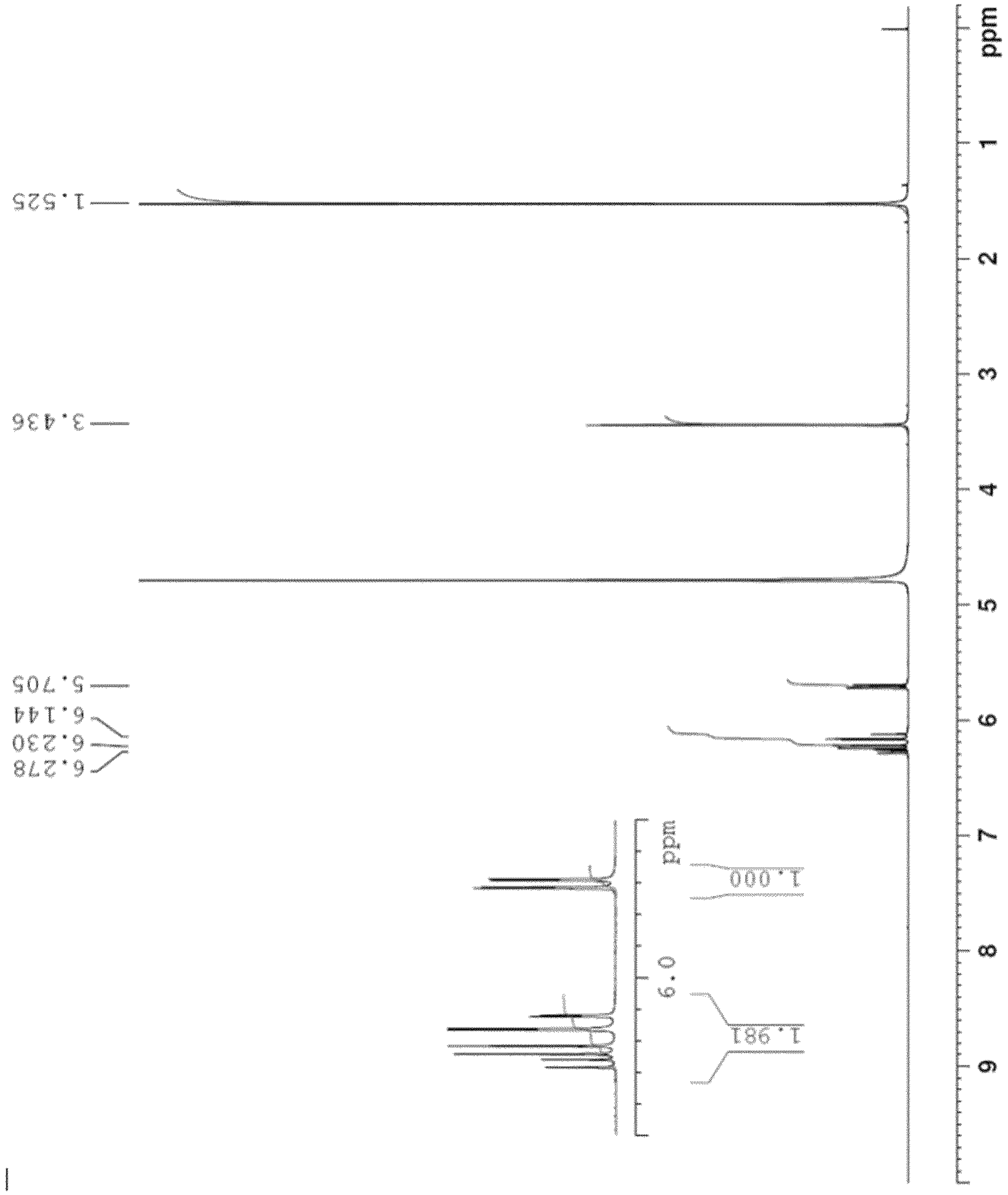

[Fig. 3]

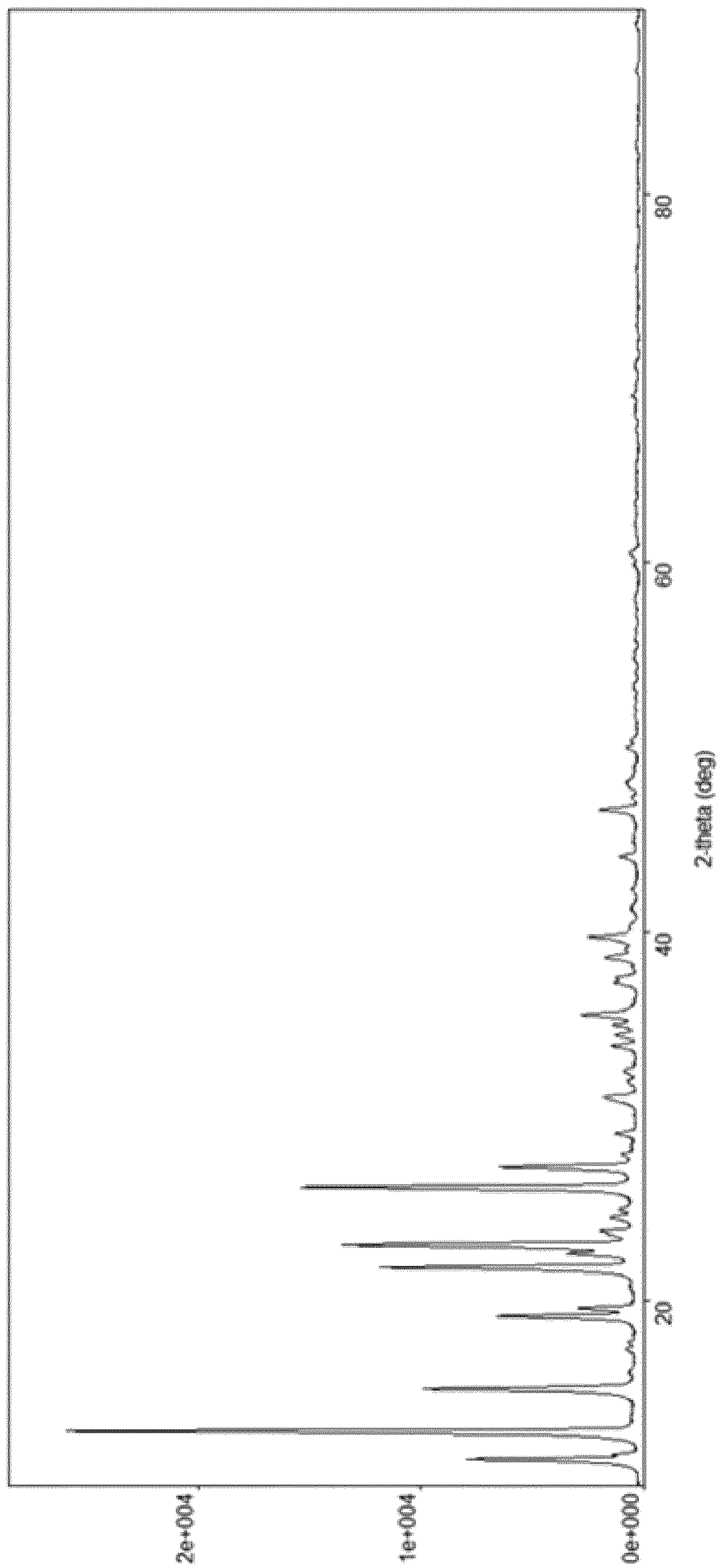

[Fig. 4]

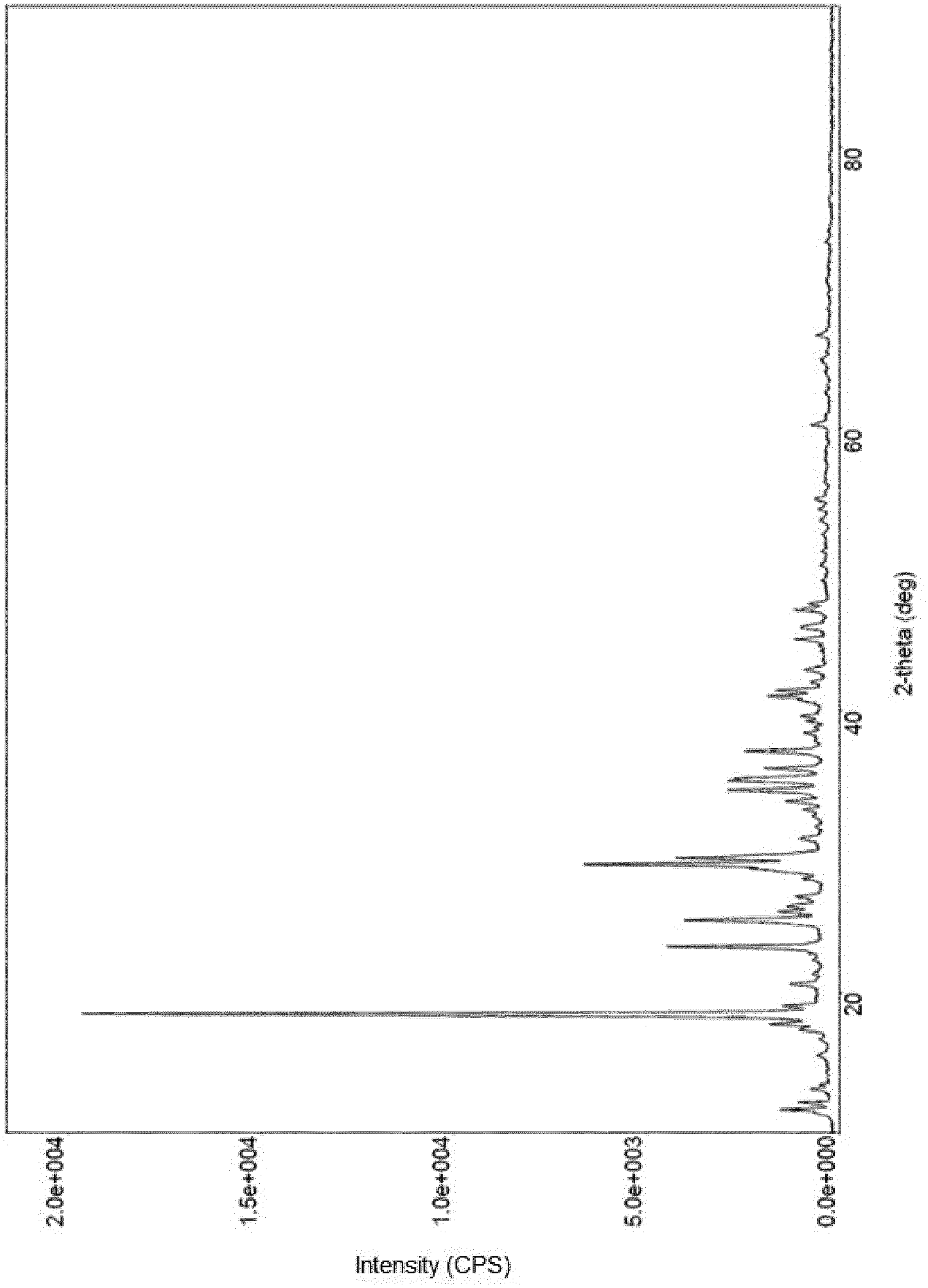
Intensity (CPS)
2.0e+004
1.5e+004
1.0e+004
5.0e+003
0.0e+000
2-theta (deg)
20
40
60
80

[Fig. 5]

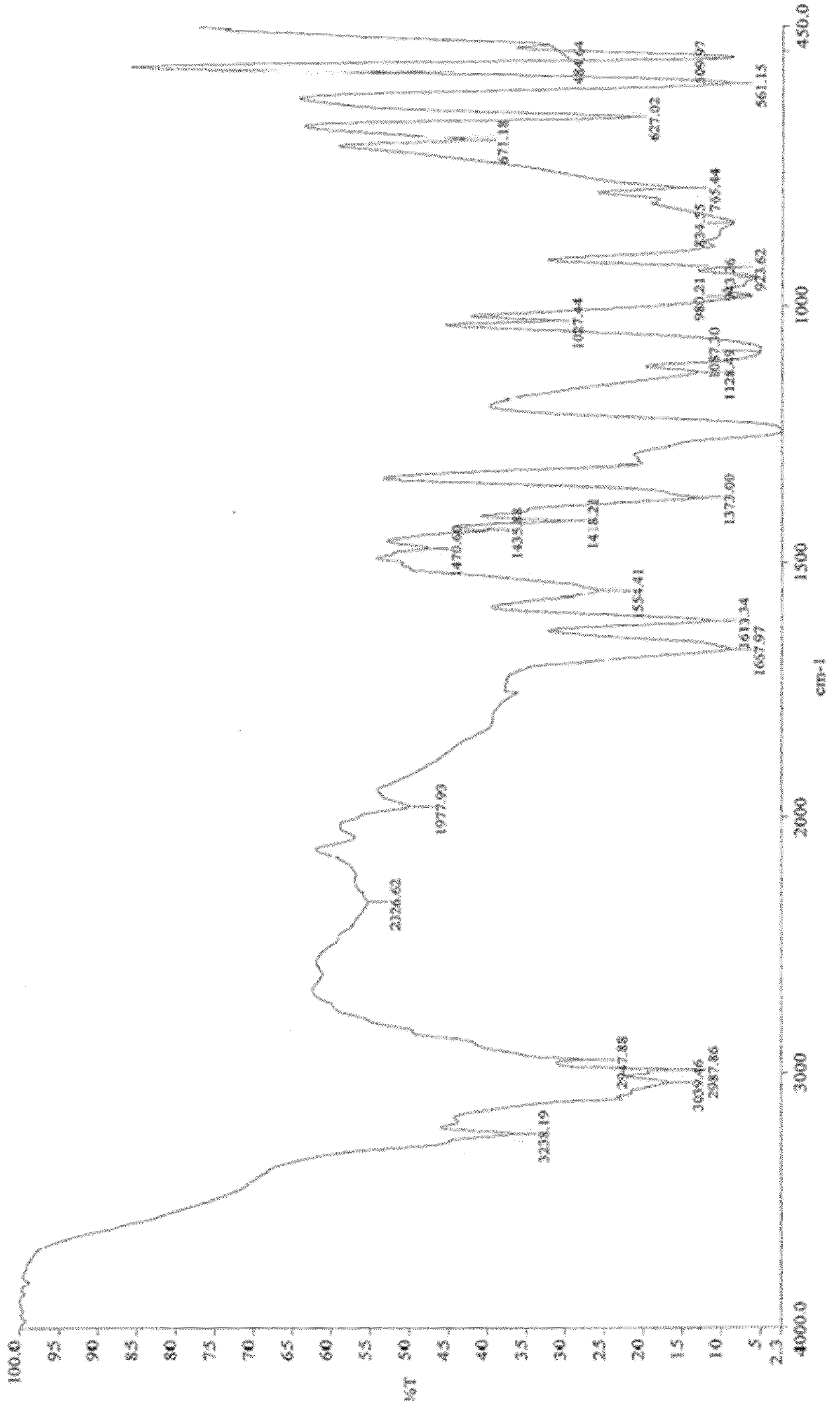
%T
cm-1
100.0
2.3
4000.0
3000
2000
1500
1000
450.0
3238.19
3039.46
2987.86
2947.88
2326.62
1977.93
1657.97
1613.34
1554.41
1470.60
1435.88
1418.23
1373.00
1128.49
1087.30
1027.44
980.21
943.26
923.62
834.55
765.44
671.18
627.02
561.15
509.97
484.64

[Fig. 6]

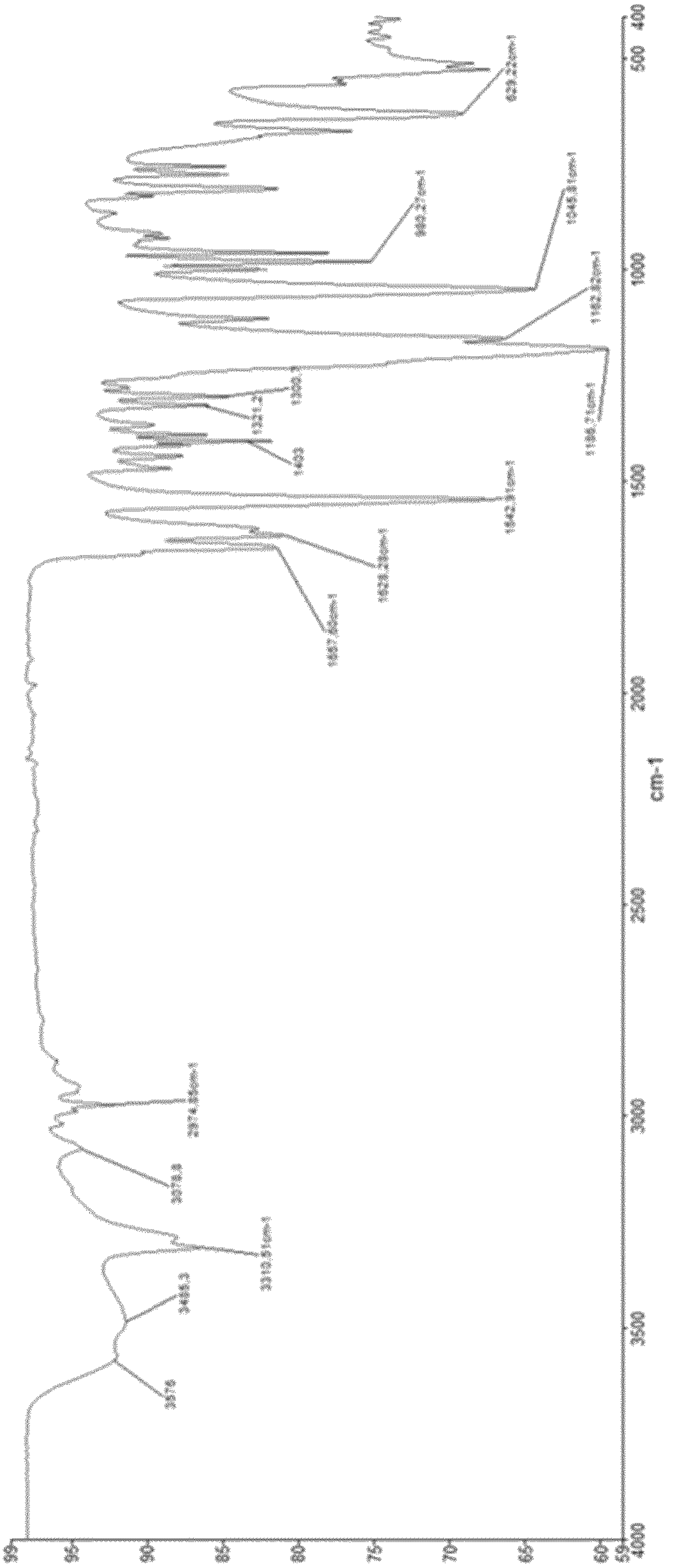

[Fig. 7]

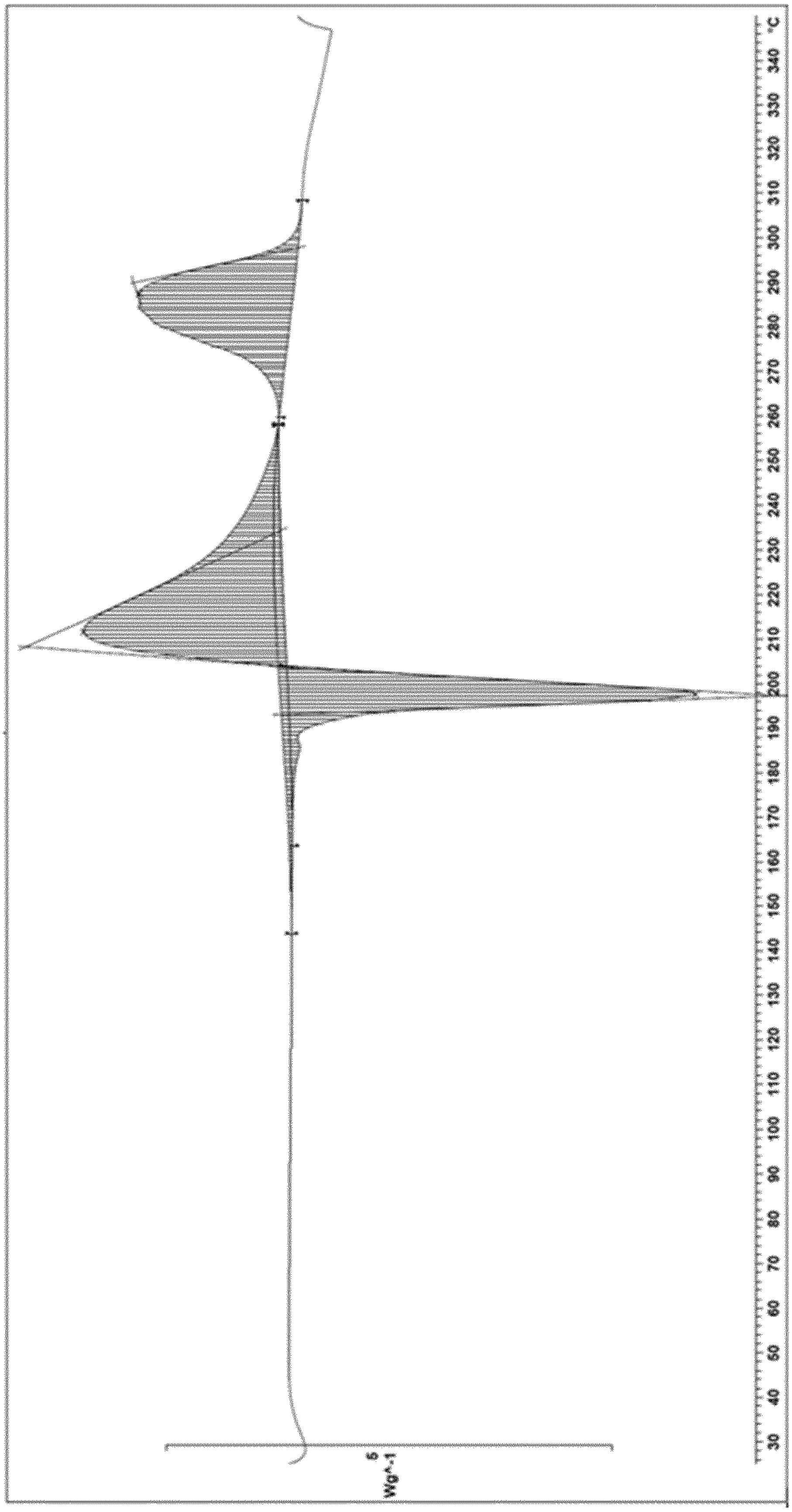
°C
340
330
320
310
300
290
280
270
260
250
240
230
220
210
200
190
180
170
160
150
140
130
120
110
100
90
80
70
60
50
40
30
5
Wg^-1

[Fig. 8]

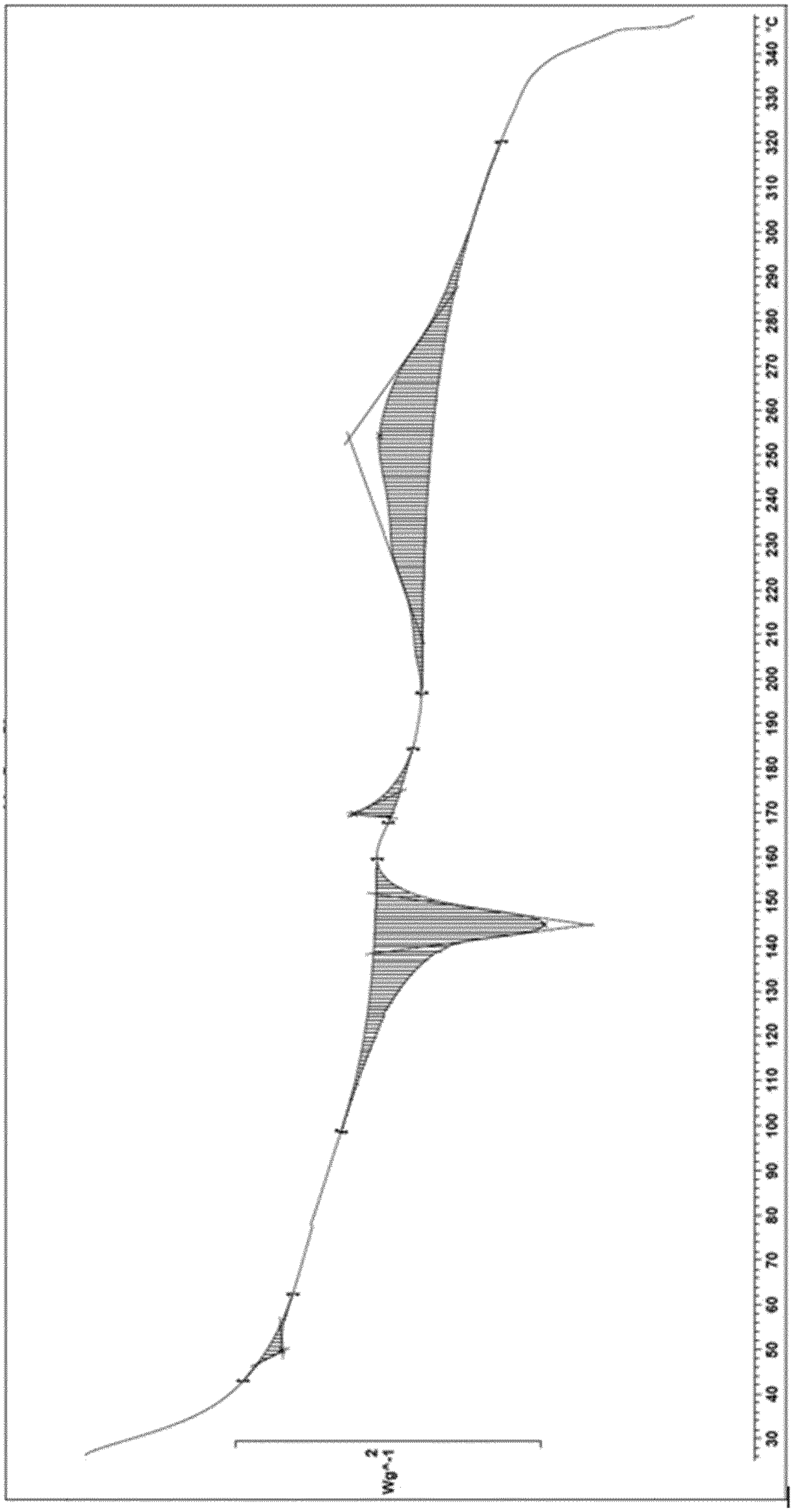

°C
30
40
50
60
70
80
90
100
110
120
130
140
150
160
170
180
190
200
210
220
230
240
250
260
270
280
290
300
310
320
330
340
2
Wg^-1

[Fig. 9]

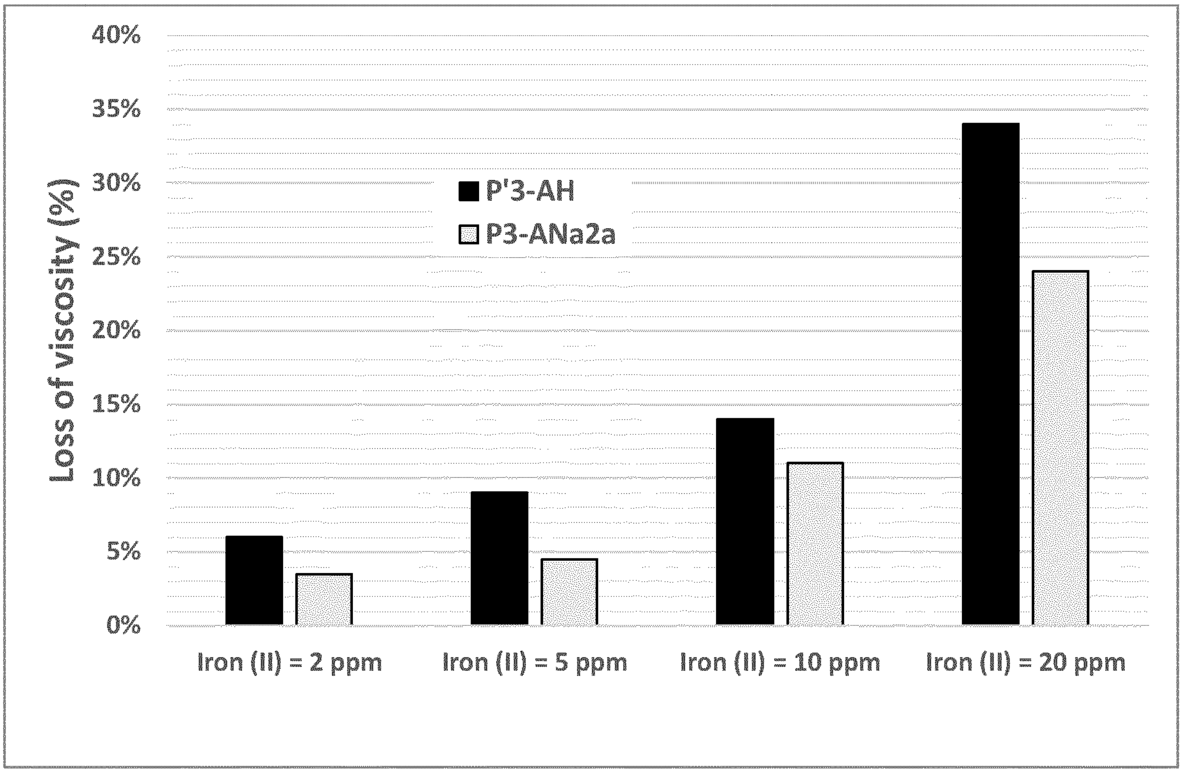
Loss of viscosity (%)
40%
35%
30%
25%
20%
15%
10%
5%
0%
P'3-AH
P3-ANa2a
Iron (II) = 2 ppm
Iron (II) = 5 ppm
Iron (II) = 10 ppm
Iron (II) = 20 ppm

[Fig. 10]

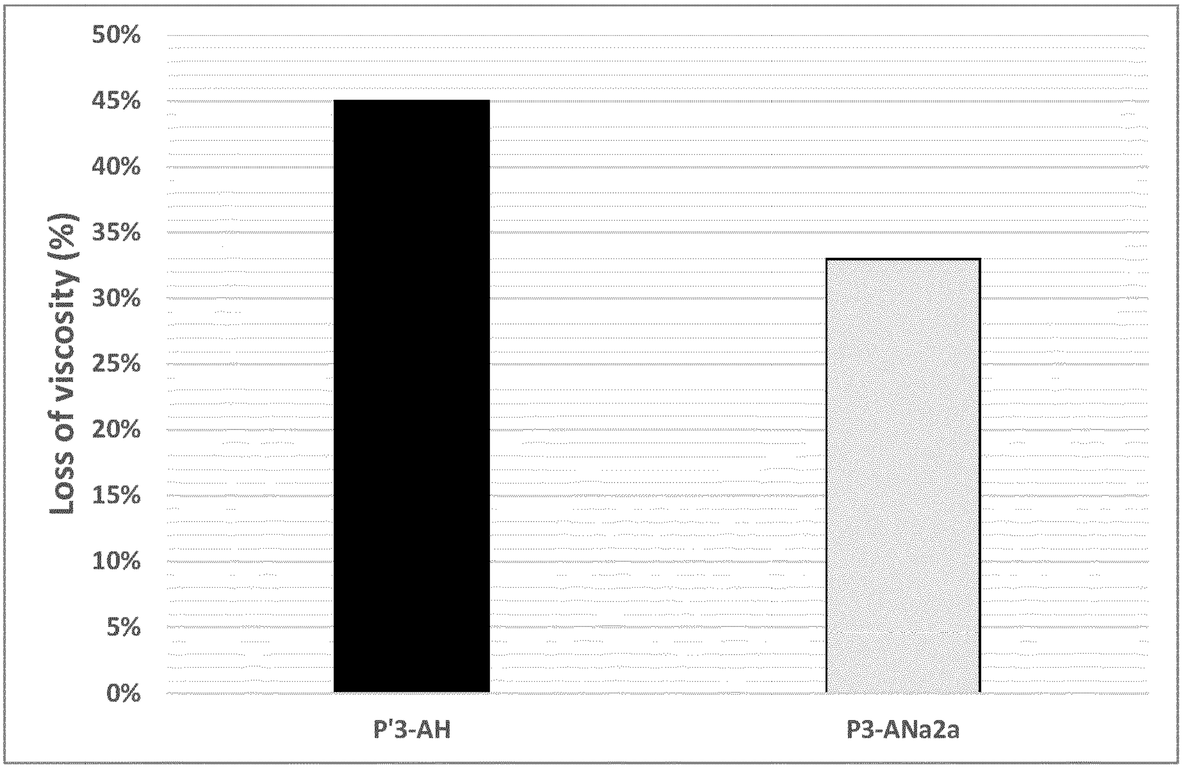
Loss of viscosity (%)
50%
45%
40%
35%
30%
25%
20%
15%
10%
5%
0%
P'3-AH
P3-ANa2a

[Fig. 11]

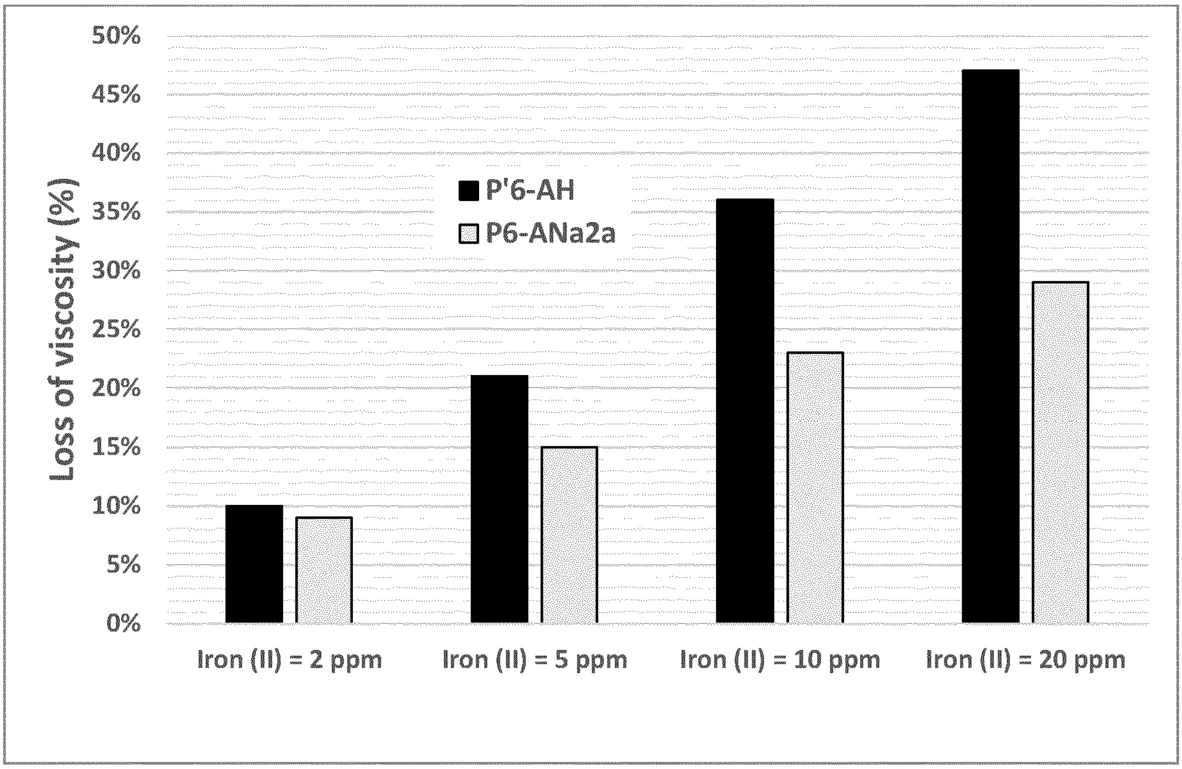
Loss of viscosity (%)
50%
45%
40%
35%
30%
25%
20%
15%
10%
5%
0%
P'6-AH
P6-ANa2a
Iron (II) = 2 ppm
Iron (II) = 5 ppm
Iron (II) = 10 ppm
Iron (II) = 20 ppm

[Fig. 12]

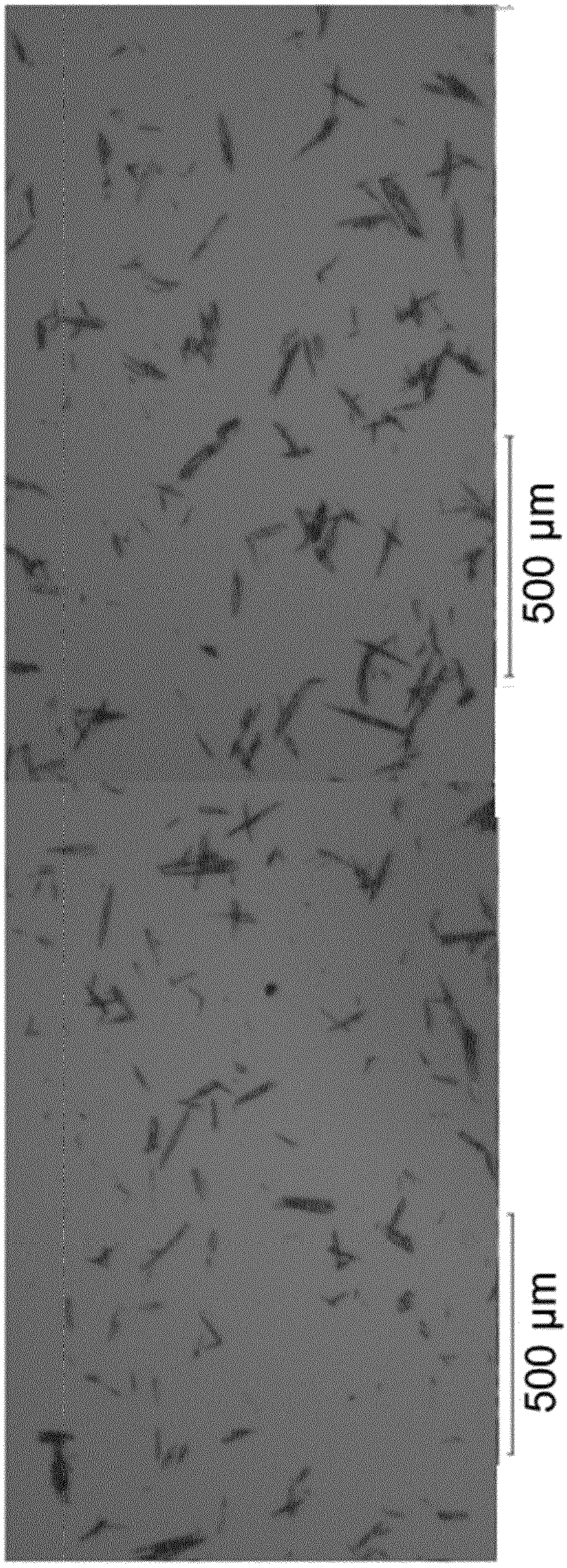

[Fig. 13]

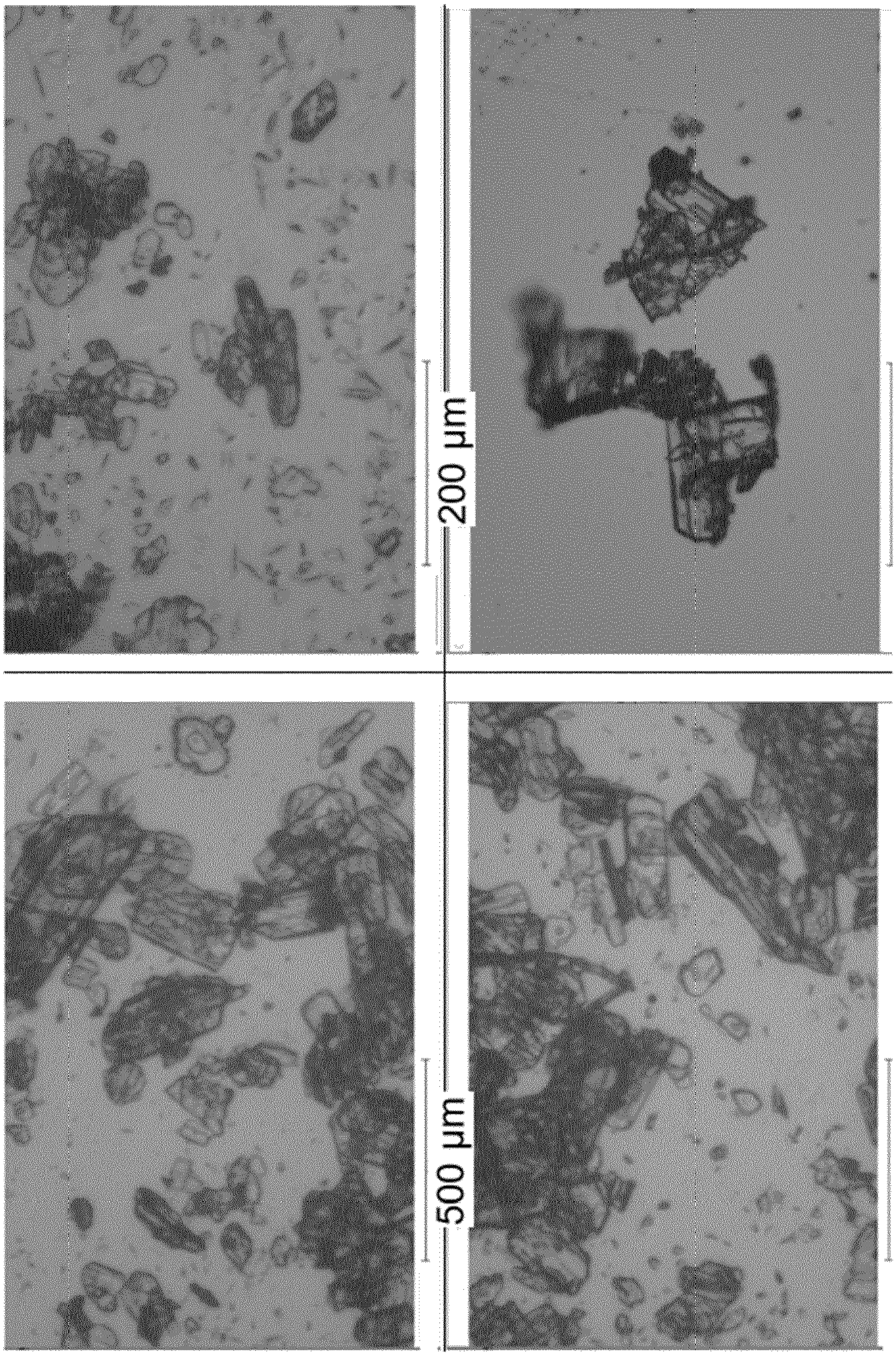

[Fig. 14]

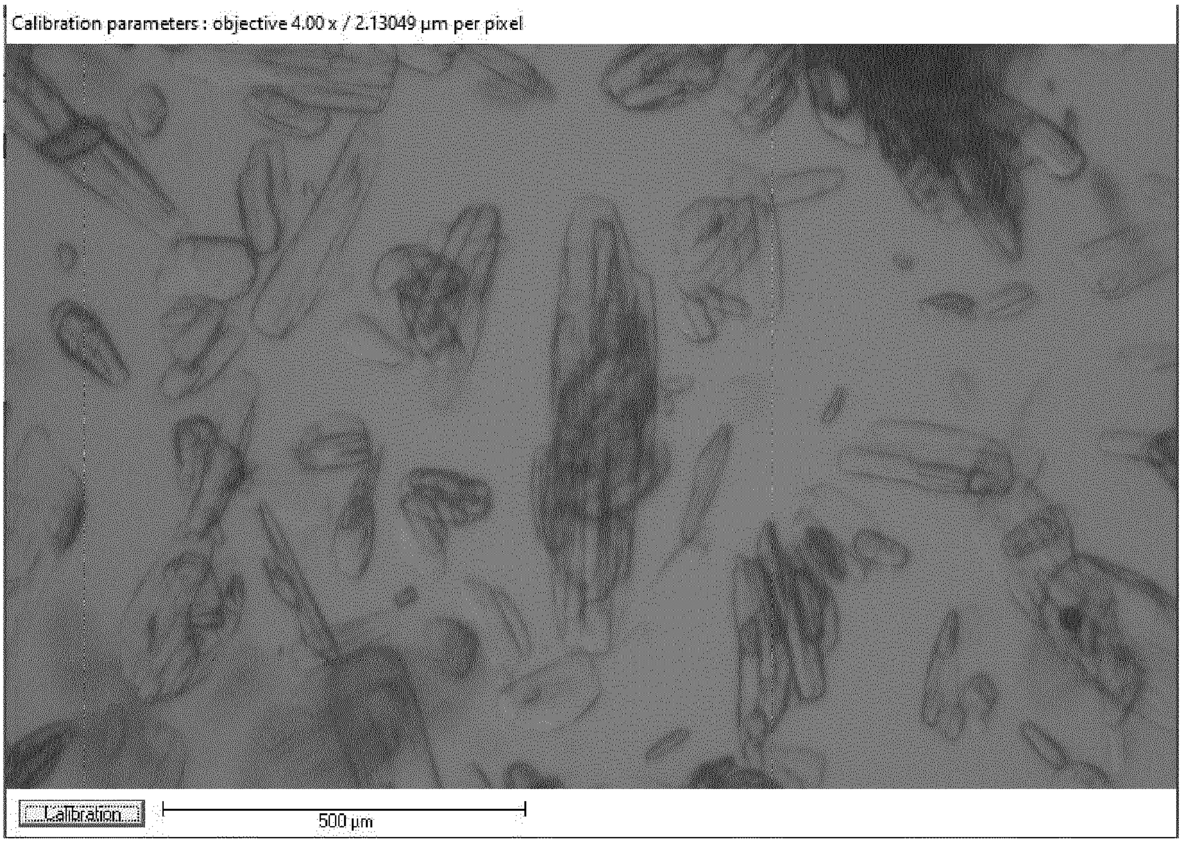
Calibration parameters : objective 4.00 x / 2.13049 µm per pixel
Calibration
500 µm

[Fig. 15]

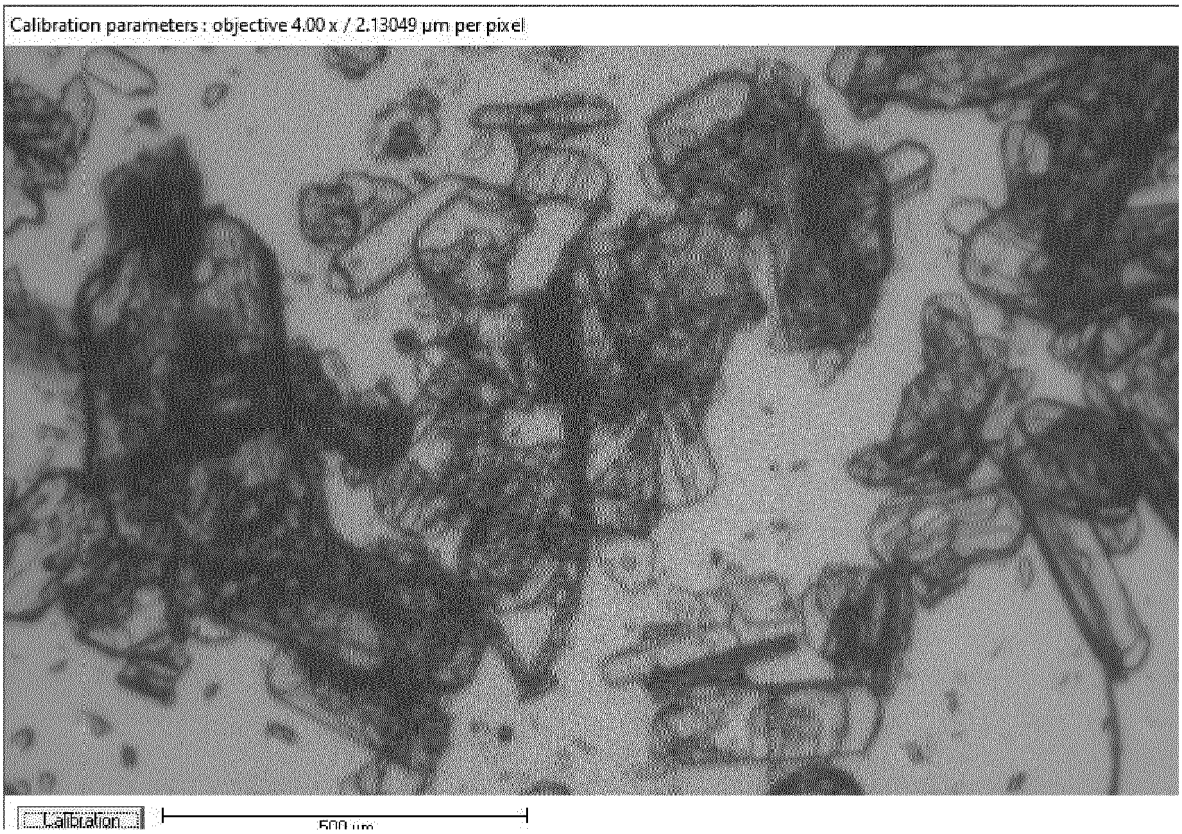
Calibration parameters : objective 4.00 x / 2.13049 µm per pixel
Calibration

[Fig. 16]

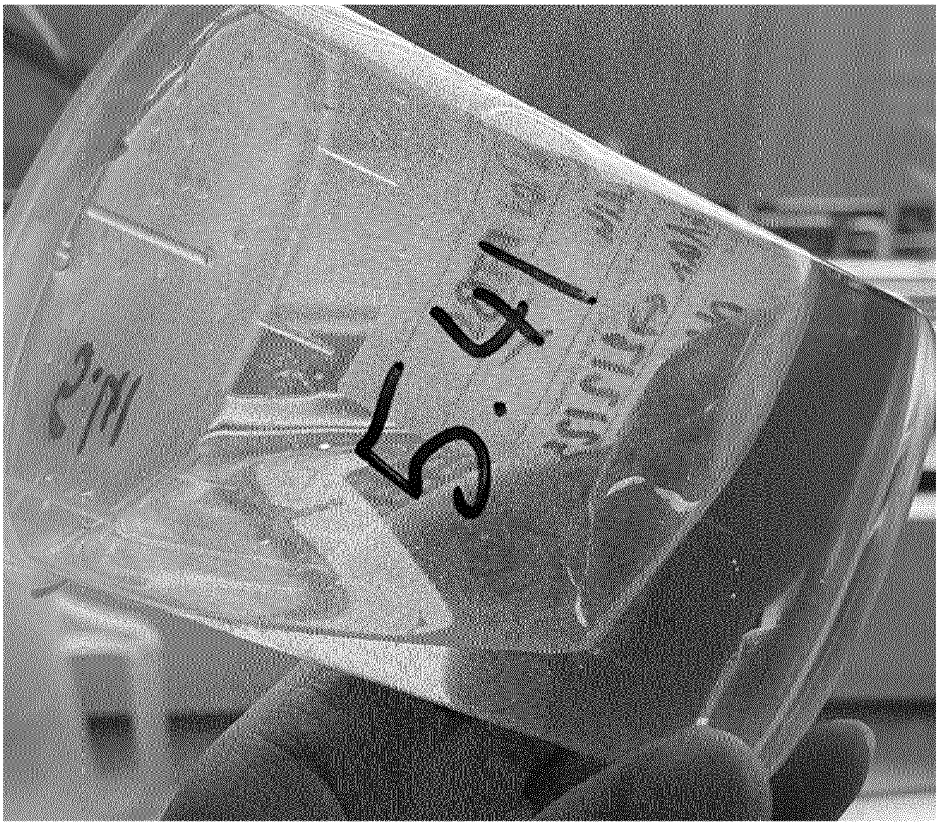


[Fig. 17]

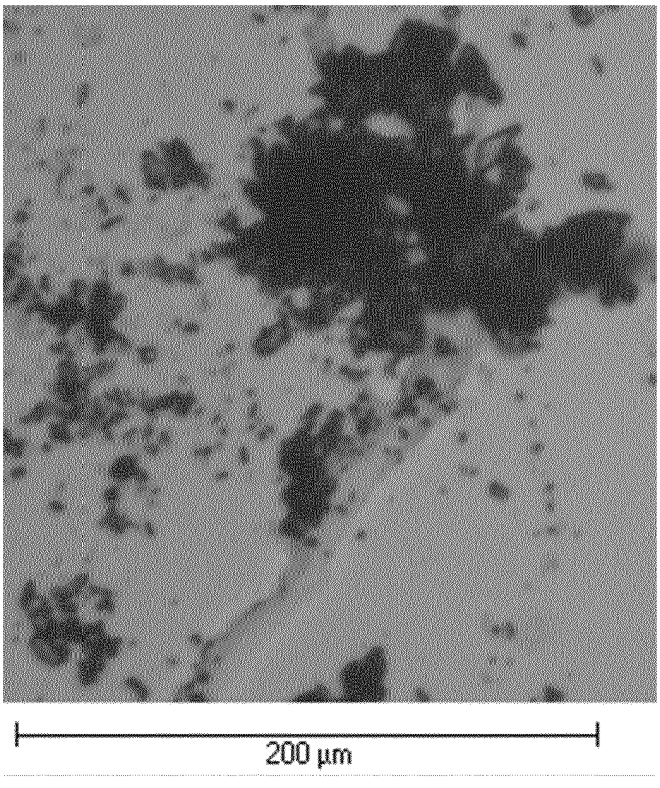

[Fig. 18]

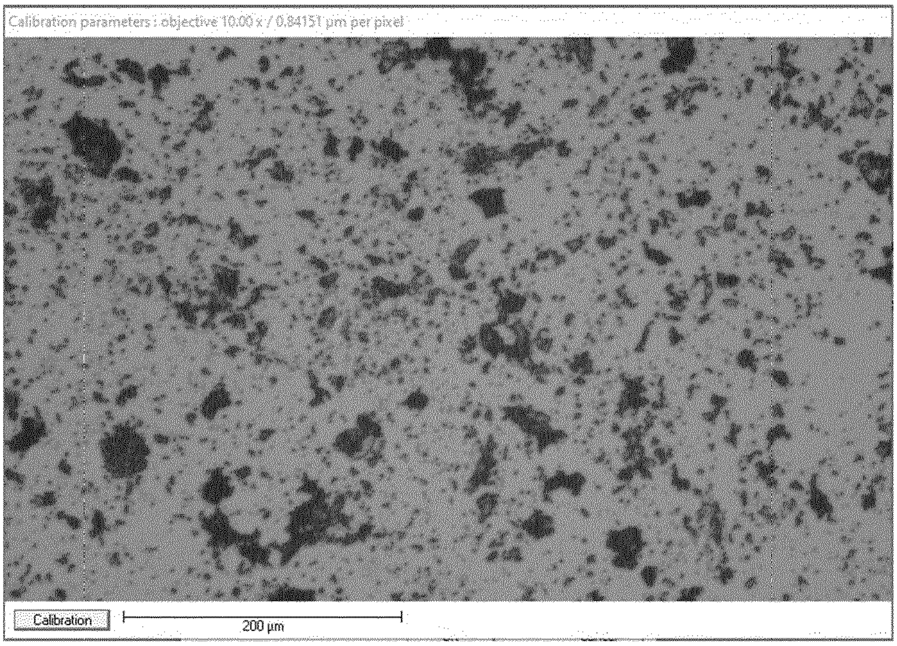
Calibration parameters : objective 10.00 x / 0.84151 µm per pixel
Calibration
200 µm

[Fig. 19]

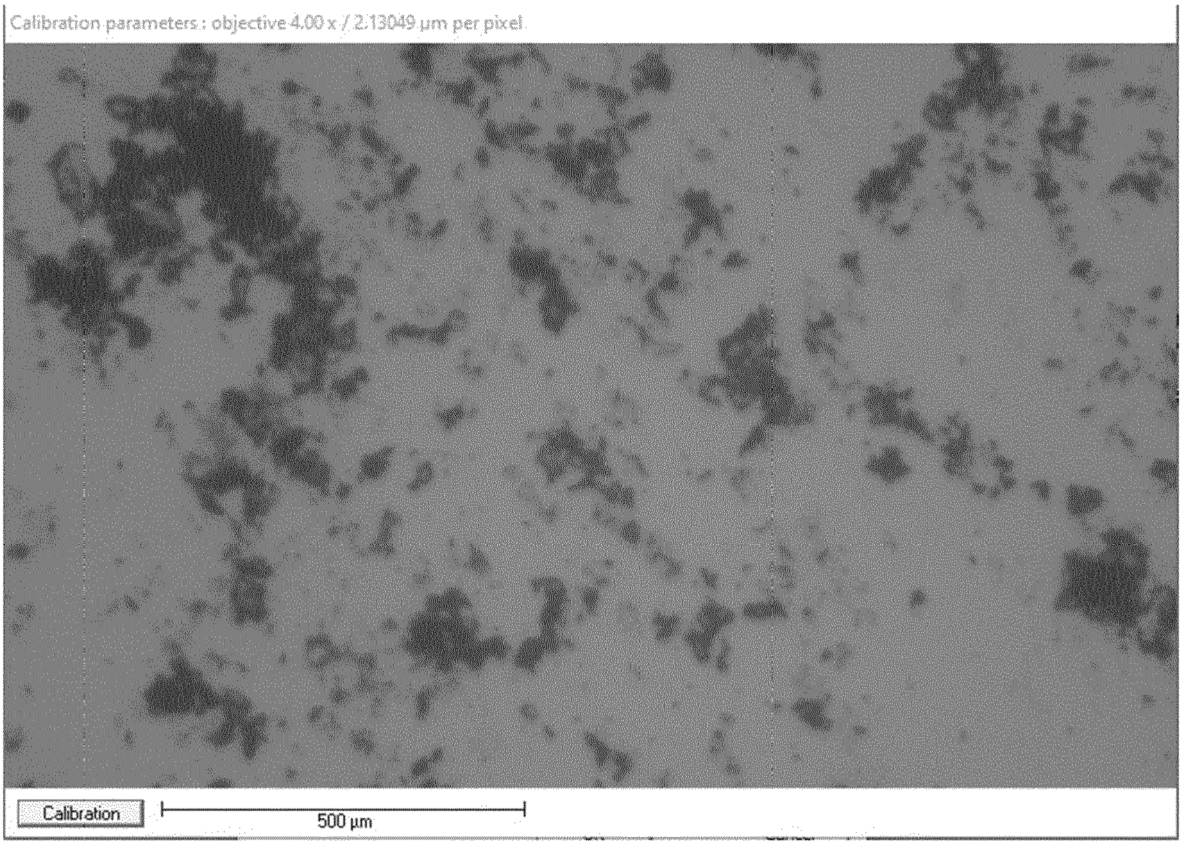
Calibration parameters : objective 4.00 x / 2.13049 µm per pixel
Calibration
500 µm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018172682 A
- EP 3601220 A
- WO 2021123599 A
- US 8186871 B
- WO 2018020175 A
- WO 2010133258 A
- US 6331647 B
- WO 2013079507 A

### Non-patent literature cited in the description

- Oil & gas science and technology. *IFP journal*, 2008, vol. 63 (1), 9-19